(19) Europäisches Patentamt
European Patent Office
Office européen des brevets

(11) **EP 3 196 175 B1**

(12) **EUROPÄISCHE PATENTSCHRIFT**

(45) Veröffentlichungstag und Bekanntmachung des Hinweises auf die Patenterteilung:
**27.10.2021   Patentblatt 2021/43**

(51) Int Cl.:
*C03C 10/14* *(2006.01)*     *C03C 3/083* *(2006.01)*
*C03C 4/02* *(2006.01)*      *C03C 4/10* *(2006.01)*

(21) Anmeldenummer: **17150458.2**

(22) Anmeldetag: **05.01.2017**

(54) **GLASKERAMIK-KOCHMULDE MIT EINEM INFRAROT-SENSOR**

GLASS CERAMIC COOKTOP WITH AN INFRARED SENSOR

PLAQUE DE CUISSON EN VITROCÉRAMIQUE COMPRENANT UN CAPTEUR INFRAROUGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.01.2016   DE 102016101048**

(43) Veröffentlichungstag der Anmeldung:
**26.07.2017   Patentblatt 2017/30**

(73) Patentinhaber: **SCHOTT AG**
**55122 Mainz (DE)**

(72) Erfinder:
• **DÖRK, Birgit**
**55128 Mainz (DE)**
• **BOCKMEYER, Matthias**
**55116 Mainz (DE)**
• **ZENKER, Thomas**
**55268 Nieder-Olm (DE)**
• **WEISS, Evelin**
**55131 Mainz (DE)**
• **OHL, Gerold**
**55286 Sulzheim (DE)**
• **TAPLAN, Martin**
**55120 Mainz (DE)**
• **DUDEK, Roland**
**55545 Bad Kreuznach (DE)**
• **BACKES, Sascha**
**55593 Rüdesheim (DE)**

(74) Vertreter: **Blumbach · Zinngrebe Patentanwälte PartG mbB**
**Alexandrastraße 5**
**65187 Wiesbaden (DE)**

(56) Entgegenhaltungen:
EP-A1- 1 170 264       WO-A1-2008/148529
WO-A1-2015/068393      DE-A1-102009 013 127
DE-C1- 19 654 773      US-A1- 2010 304 948

**Beschreibung**

Die Erfindung betrifft eine Kochmulde mit einer Glaskeramik-Kochfläche mit zumindest einer Kochzone und zumindest einem unter der Glaskeramik-Kochfläche im Bereich der Kochzone angeordneten Heizkörper.

Glaskeramiken auf Lithium-Aluminosilikat-Basis (LAS) werden auf Grund ihrer geringen thermischen Ausdehnung für viele Anwendungen, bei denen hohe Temperaturen und Temperaturunterschiede auftreten, verwendet. So werden Glaskeramik-Platten als Kochflächen von Kochmulden eingesetzt. Die Energie zum Kochen wird von unter der Glaskeramik-Kochfläche angeordneten Heizkörpern bereitgestellt. Diese können zum Beispiel als Strahlungs-, Halogen- oder Induktions-Heizkörper, aber auch als mittelbar oder unmittelbar auf die Unterseite der Glaskeramik-Kochfläche aufgebrachte Widerstandsheizer ausgelegt sein. Die Energie der Heizkörper wird durch die Glaskeramik-Kochfläche hindurch auf ein aufgestelltes Kochgeschirr, beispielsweise einen Topf oder eine Pfanne, übertragen. In Abhängigkeit von insbesondere der gewählten Leistungseinstellung, dem verwendeten Kochgeschirr sowie der Art des Heizkörpers wird auch die Glaskeramik-Kochfläche aufgeheizt.

Die Einstellung einer gewünschten Kochguttemperatur erfolgt über eine geeignete, manuell vorgenommene Einstellung der Heizkörperleistung. Um ein zumindest teilweise automatisiertes Kochen zu ermöglichen ist es wünschenswert, die Kochguttemperatur zu erfassen und die Heizkörperleistung in Abhängigkeit von der Kochguttemperatur zu regeln.

Aus der GB 2 072 334 ist eine Anordnung mit einem Infrarot-Sensor bekannt. Ein Teil der Wärmestrahlung eines Topfbodens wird von einem geeignet geformten Reflektor aufgefangen und direkt bzw. über optische Fasern zu dem Infrarot-Sensor geleitet. Der Topf steht gemäß dem gezeigten Ausführungsbeispiel auf einem Kontaktheizkörper auf, wobei der Reflektor zwischen den Heizspiralen angeordnet und zu dem Topfboden hin ausgerichtet ist. An Hand der gemessenen Infrarotstrahlung kann die Temperatur des Topfbodens bestimmt und daraus auf die Temperatur des Kochguts geschlossen werden. Mit Hilfe einer geeigneten Leistungselektronik kann der Heizkörper in Abhängigkeit von der Kochguttemperatur geregelt werden. Die Anordnung eignet sich nicht zum Einsatz unter heute bekannten Glaskeramik-Kochflächen, da deren Transmission in dem Wellenlängenbereich der von dem Topf abgegebenen Wärmestrahlung zu gering ist, um eine ausreichend genaue Messung der Topfbodentemperatur zu ermöglichen. Dies gilt insbesondere für niedrige Topfbodentemperaturen im Bereich von 70-150 °C, wie sie für übliche Koch- und Garvorgänge häufig vorliegen.

Die DE 198 56 140 A1 offenbart ein sensorgesteuertes Kochfeld mit einer Glaskeramik-Kochfläche und unterhalb der Glaskeramik-Kochfläche angeordneten Heizkörpern. Eine Wärmestrahlungs-Sensoreinheit ist im Bereich einer Kochzone zu der Unterseite der Glaskeramik-Kochfläche hin ausgerichtet und bestimmt die von der Glaskeramik-Kochfläche abgestrahlte Wärmestrahlung. Die Leistung eines zugeordneten Heizkörpers wird in Abhängigkeit von der gemessenen Wärmestrahlung und damit der Temperatur der Glaskeramik-Kochfläche im Bereich des Messflecks der Wärmestrahlungs-Sensoreinheit gesteuert. Um möglichst nur die von der Glaskeramik-Kochfläche ausgehende Wärmestrahlung zu erfassen, ist deren Transmissionsgrad im spektralen Messbereich der Wärmestrahlungs-Sensoreinheit auf weniger als 30%, vorzugsweise auf weniger als 10%, beschränkt. Anhand der Temperatur der Glaskeramik-Kochfläche wird auf die Temperatur eines aufgestellten Gargefäßes geschlossen und diese entsprechend geregelt. Nachteilig ist jedoch, dass der Zusammenhang zwischen der Glaskeramik-Temperatur und der Temperatur des Gargefäßes von vielen Faktoren abhängig ist, beispielsweise von der Qualität eines aufgestellten Topfes oder von dem zu erwärmenden Kochgut. Die Anordnung führt demnach nur unter eng definierten Anforderungen und Vorgaben bezüglich des verwendeten Kochgeschirrs und der zubereiteten Speisen zu befriedigenden Ergebnissen.

Im Markt sind Glaskeramik-Kochflächen bekannt, bei denen die IR-Sensoren unterhalb der Glaskeramik und innerhalb der Induktionsspule angeordnet sind. Diese so angeordneten IR-Sensoren weisen ihre größte Empfindlichkeit im Wellenlängenbereich kleiner 3000nm auf.

Aus der Schrift DE 295 22 310 U1 ist eine infrarotgesteuerte Garungseinheit für ein Glaskeramik-Kochfeld bekannt. Zumindest ein Infrarot-Sensor ist leicht erhöht oberhalb des Kochfeldes angeordnet. Dieser ermöglicht die Messung der Wandtemperatur eines aufgestellten Gargerätes, welche dann zur Regelung eines Kochvorgangs durch entsprechende Ansteuerung eines Heizkörpers verwendet wird. Um den unterschiedlichen Emissionskoeffizienten verschiedener Kochtopfmaterialien Rechnung zu tragen, sind verschiedene Beschichtungen der verwendeten Gargeräte im Bereich des Meßflecks des Infrarot-Sensors vorgeschlagen. Die genaue Kenntnis der Wandtemperatur des Gargerätes ermöglicht eine exakte Regelung der Temperatur des enthaltenen Kochgutes. Nachteilig muss der Infrarot-Sensor jedoch oberhalb der Glaskeramik-Kochfläche angeordnet werden. Dies wirkt sich störend auf den ästhetischen Eindruck der Kochmulde sowie auf die Positioniermöglichkeiten für Kochtöpfe oder sonstige Kochutensilien auf der Kochfläche bzw. der umgebenden Arbeitsfläche aus. Weiterhin kann der aus der Arbeitsebene herausragende Infrarot-Sensor, beispielsweise beim Hantieren mit schweren Kochtöpfen, leicht beschädigt werden. Vorgeschlagene versenkbare Infrarot-Sensoren sind mechanisch aufwendig.

Die Schriften WO 2015/068393 A1, DE 19654773 C1 und WO 2008/148529 A1  offenbaren weitere sensorgesteuerte Kochfelder mit Glaskeramik-Kochflächen.

Die Herstellung geeigneter Glaskeramiken sowie die Anwendung im Kochfeldbereich ist in der Literatur beschrieben (z.B. "Low Thermal Expansion Glass Ceramics", Editor H. Bach, ISBN 3-540-58598-2). Ausgehend von einer durch einen Schmelz- und anschließenden Formgebungsprozess hergestellten Grünglasplatte erfolgt durch eine geeignete Temperaturbehandlung eine Keramisierung des Materials. Dabei bilden sich zunächst Keime, auf denen dann, gesteuert durch eine geeignete Temperatur-Zeit-Kurve, sogenannte Hochquarzmischkristalle (HQMK) aufwachsen. Diese weisen, im Gegensatz zu der umgebenden Glasmatrix, einen richtungsabhängigen und negativen thermischen Ausdehnungskoeffizienten auf. Bei geeignetem Verhältnis zwischen der kristallinen und der amorphen Phase stellt sich dadurch über einen weiten Temperatur-Einsatzbereich ein sehr niedriger Ausdehnungskoeffizient der Glaskeramik ein. Die derart hergestellten und heute überwiegend verwendeten Glaskeramik-Kochflächen mit HQMK als vorherrschende Kristallphase sind im sichtbaren Bereich dunkel gefärbt und weisen keine oder nur eine geringe Streuung auf. Durch die dunkle Färbung wird ein Einblick in die Kochmulde verhindert, so dass diese in Auflicht schwarz wirkt. Ein leuchtender Heizkörper oder eine unter der Glaskeramik-Kochfläche angeordnete Anzeige oder Lichtquelle kann jedoch durch die Glaskeramik-Kochfläche hindurch gesehen werden. Nachteilig zeigen die heute verwendeten Glaskeramik-Kochflächen im spektralen Messbereich bekannter Infrarot-Sensoren eine zu geringe Transmission, um eine geeignete optische Temperaturmessung eines Topfbodens durch die Glaskeramik hindurch durchzuführen und damit eine automatische Regelung eines Kochvorgangs zu ermöglichen.

Die Schriften DE 10 2009 013127 A1 und US 2010/304948 A1 offenbaren LAS-Glaskeramiken für Kochfelder.

Es ist bekannt, dass bei einer weiteren Temperaturbehandlung der Glaskeramik die HQMK in Keatitmischkristalle (KMK) umgewandelt werden können. KMK weisen ebenfalls richtungsabhängig negative, jedoch von den HQMK abweichende thermische Ausdehnungskoeffizienten auf. Weiterhin unterscheiden sich die Kristallformen in ihren optischen Eigenschaften. Durch das starke Kristallwachstum bei der Umwandlung der HQMK in KMK werden Streuzentren gebildet, wodurch eine transluzente bzw. opake Glaskeramik erhalten wird. Einige so hergestellte transluzente oder opake Glaskeramiken weisen eine erhöhte Transmission im spektralen Messbereich bekannter Infrarot-Sensoren auf, was eine Bestimmung einer Topfbodentemperatur mittels IR-Messung durch die Glaskeramik hindurch ermöglicht. Nachteilig können unter einer solchen Glaskeramik-Kochfläche angeordnete Anzeigen bzw. selbstleuchtende Heizkörper von einem Benutzer nicht oder aufgrund der starken Streuung der Glaskeramik-Kochfläche nur stark verzeichnet gesehen werden. Im Auflicht wirken solche Glaskeramik-Kochflächen zumeist weiß, was für viele Anwendungen nicht gewünscht ist.

Der geringe thermische Ausdehnungskoeffizient sowie die hohen Einsatztemperaturen erschweren ein geeignetes Vorspannen der Glaskeramik-Kochfläche. Um dennoch die erforderliche Festigkeit, insbesondere die erforderliche Stoß- und Biegezugfestigkeit, zu erreichen, werden die Glaskeramik-Kochflächen in dazu ausreichenden Materialstärken ausgebildet. Weiterhin ist es bekannt, auf der im Einsatz überwiegend auf Zug belasteten Unterseite der Glaskeramik-Kochfläche Noppen vorzusehen. Die Noppen trennen die Bereiche der höchsten Zugbelastung, welche in den Noppentälern liegen, von denen der stärksten Oberflächenverletzungen als potentiellen Bruchausgängen, welche sich strukturbedingt auf den Noppenbergen ausbilden. Dadurch kann die Festigkeit der von Glaskeramik-Kochflächen deutlich erhöht werden. Für bekannte Glaskeramik-Kochflächen bedeutet dies, dass mit einer genoppten Glaskeramik-Platte mit einer Materialdicke von größer oder gleich 3,8 mm die Anforderungen an die Festigkeit der Glaskeramik-Kochmulde erfüllt werden. Dabei sind die Anforderungen an die Festigkeit durch einschlägige Normen, wie beispielsweise die EN 60335, die UL 858 oder die CSA 22.2, vorgegeben.

Die Materialstärke beeinflusst im Kochbetrieb den Energiefluss durch die Glaskeramik-Kochfläche. Sie wirkt sich damit auf die Regelbarkeit eines Kochvorgangs sowie auf die Energieverluste aus. Aus diesen Gründen sowie zur Einsparung von Material und Energie bei der Herstellung der Glaskeramik-Kochfläche wird es angestrebt, diese möglichst dünn zu gestalten.

Es ist Aufgabe der Erfindung, eine Kochmulde mit einer Glaskeramik-Kochfläche bereitzustellen, welche eine einfache und genaue Regelung eines Kochvorgangs ermöglicht. Dabei soll die Glaskeramik-Kochfläche im sichtbaren Bereich dunkel gefärbt, jedoch nicht oder nur wenig streuend ausgeführt sein. Die Erfindung löst diese bisher widersprüchlichen Vorgaben in überraschend einfacher Weise.

Die Aufgabe der Erfindung wird gelöst mit einer Kochmulde mit einer Glaskeramik-Kochfläche mit zumindest einer Kochzone und zumindest einem unter der Glaskeramik-Kochfläche im Bereich der Kochzone angeordneten Heizkörper, bei welcher vorzugsweise in oder an der Kochmulde zumindest ein Infrarot-Sensor angeordnet ist, wobei ein Messbereich des vorzugsweisen Infrarot-Sensors durch die Glaskeramik-Kochfläche hindurch zu der Kochzone hin ausgerichtet ist, wobei der vorzugsweise Infrarot-Sensor vorzugsweise mit einer Elektronik verbunden ist, wobei die vorzugsweise Elektronik insbesondere dazu ausgelegt ist, die Leistung des zumindest einen Heizkörpers in Abhängigkeit von einem Ausgangssignal des Infrarot-Sensors zu regeln und wobei die Glaskeramik-Kochfläche als Lithium-Aluminosilikat-Glaskeramik (LAS-Glaskeramik) mit folgenden Bestandteilen in folgender Zusammensetzung (in Gewichtsprozent) gebildet ist:

| | |
|---|---|
| $Al_2O_3$ | 18 - 23 |
| $Li_2O$ | 2,5 - 4,2 |
| $SiO_2$ | 60 - 69 |
| $ZnO$ | 0 - 2 |
| $Na_2O + K_2O$ | 0,2 - 1,5 |
| $MgO$ | 0 - 1,5 |
| $CaO + SrO + BaO$ | 0 - 4 |
| $B_2O_3$ | 0 - 2 |
| $TiO_2$ | 2,3 - 4,5 |
| $ZrO_2$ | 0,5 - 2 |
| $P_2O_5$ | 0 - 3 |
| $SnO_2$ | 0 - <0,6 |
| $Sb_2O_3$ | 0 - 1,5 |
| $As_2O_3$ | 0 - 1,5 |
| $TiO_2 + ZrO_2 + SnO_2$ | 3,8 - 6 |
| vorzugsweise $V_2O_5$ | 0,01 - 0,08 |
| $Fe_2O_3$ | 0,008 - 0,3 |

und gegebenenfalls weitere Farboxide, in Summe bis maximal 1,0 Gewichtsprozent, wobei die Glaskeramik-Kochfläche an ihrer Oberfläche oder zu ihrer Oberfläche hin gerichtet eine Gradientenschicht und einen darunter liegenden Kern aufweist, wobei die Glaskeramik-Kochfläche im Kern Keatitmischkristall (KMK) als vorherrschende Kristallphase und in der Gradientenschicht Hochquarzmischkristall (HQMK) als vorherrschende Kristallphase aufweist und wobei der KMK-Kristallphasenanteil in einer Tiefe von 10 $\mu$m oder mehr 50% der Summe der HQMK- und KMK-Kristallphasenanteile übersteigt. Hierbei kann für eingefärbte Glaskeramiken eine Untergrenze des $Fe_2O_3$-Wertes bei 0,03 Gew.% vorteilhaft sein.

Eine besonders bevorzugte Ausführungsform betrifft eine Kochmulde mit einer Glaskeramik-Kochfläche mit zumindest einer Kochzone und zumindest einem unter der Glaskeramik-Kochfläche im Bereich der Kochzone angeordneten Heizkörper, bei welcher in oder an der Kochmulde zumindest ein Infrarot-Sensor angeordnet ist, wobei ein Messbereich des Infrarot-Sensors durch die Glaskeramik-Kochfläche hindurch zu der Kochzone hin ausgerichtet ist, wobei der Infrarot-Sensor mit einer Elektronik verbunden ist, wobei die Elektronik dazu ausgelegt ist, die Leistung des zumindest einen Heizkörpers in Abhängigkeit von einem Ausgangssignal des Infrarot-Sensors zu regeln und wobei die Glaskeramik-Kochfläche als Lithium-Aluminosilikat-Glaskeramik (LAS-Glaskeramik) mit folgenden Bestandteilen in folgender Zusammensetzung (in Gewichtsprozent) gebildet ist:

| | |
|---|---|
| $Al_2O_3$ | 18 - 23 |
| $Li_2O$ | 2,5 - 4,2 |
| $SiO_2$ | 60 - 69 |
| $ZnO$ | 0 - 2 |
| $Na_2O + K_2O$ | 0,2 - 1,5 |
| $MgO$ | 0 - 1,5 |
| $CaO + SrO + BaO$ | 0 - 4 |
| $B_2O_3$ | 0 - 2 |
| $TiO_2$ | 2,3 - 4,5 |
| $ZrO_2$ | 0,5 - 2 |
| $P_2O_5$ | 0 - 3 |
| $SnO_2$ | 0 - <0,6 |
| $Sb_2O_3$ | 0 - 1,5 |
| $As_2O_3$ | 0 - 1,5 |
| $TiO_2 + ZrO_2 + SnO_2$ | 3,8 - 6 |
| vorzugsweise $V_2O_5$ | 0,01 - 0,08 |
| $Fe_2O_3$ | 0,008 - 0,3 |

und gegebenenfalls weitere Farboxide, in Summe bis maximal 1,0 Gewichtsprozent, wobei die Glaskeramik-Kochfläche
einen Kern aufweist und vorzugsweise
an ihrer Oberfläche oder zu ihrer Oberfläche hin gerichtet eine Gradientenschicht aufweist und der Kern unter der vorzugsweisen Gradientenschicht angeordnet ist, wobei die Glaskeramik-Kochfläche im Kern Keatitmischkristall (KMK) als vorherrschende Kristallphase und
die vorzugsweisen Gradientenschicht Hochquarzmischkristall (HQMK) als vorherrschende Kristallphase aufweist und
wobei der KMK-Kristallphasenanteil in einer Tiefe von $10\mu m$ oder mehr 50% der Summe der HQMK- und KMK-Kristallphasenanteile übersteigt

wobei jeweils normiert auf eine 4mm dicke Glaskeramik-Kochfläche, der maximale Streulichtanteil ("Haze") bei einer Wellenlänge von 470nm höchstens 15%, vorzugsweise höchstens 12%, beträgt und/oder wobei der maximale Streuanteil in einem Wellenlängenbereich von 400nm bis 500nm höchstens 20%, vorzugsweise höchstens 17%, beträgt. Auch hierbei kann für eingefärbte Glaskeramiken eine Untergrenze des $Fe_2O_3$-Wertes bei 0,03 Gew.% vorteilhaft sein.

Bei einer bevorzugten Ausführungsform beträgt der maximale Haze jeweils normiert auf eine 4mm dicke Glaskeramik-Kochfläche (11) bei einer Wellenlänge von 630nm höchstens 6%, vorzugsweise höchstens 5%, besonders bevorzugt höchstens 4%.

Normen für die Bestimmung des Haze sind, soweit nicht nachfolgend auf weitere Normen Bezug genommen werden wird, für die vorstehenden Angaben beispielsweise ISO14782 und ASTM D 1003.

Das bevorzugte glaskeramische Material sowie die hiermit erhaltene Glaskeramik der Glaskeramik-Kochfläche ist bevorzugt Arsen-frei und Antimon-frei.

Eine bevorzugte Ausführungsform des glaskeramischen Materials sowie die hiermit erhaltene Glaskeramik der Glaskeramik-Kochfläche ist bevorzugt zinnhaltig.

Vorzugsweise kann es dabei vorgesehen sein, dass der $Li_2O$-Gehalt zwischen 3,0 und 4,2 Gewichtsprozent beträgt. Ebenso kann vorzugsweise der $TiO_2$-Gehalt auf einen Bereich von 2,3 bis 4,0 Gewichtsprozent begrenzt sein. Der $Fe_2O_3$-Gehalt beträgt besonders bevorzugt 0,03 bis 0,2 Gewichtsprozent.

Die so hergestellte Glaskeramik-Kochfläche weist eine dunkle Einfärbung im sichtbaren Wellenlängenbereich bei gleichzeitig geringer Streuung (Haze) auf. Anzeigen können daher in bekannter Weise unter der Glaskeramik-Kochfläche angeordnet und ohne Streuverluste von deren Oberseite aus abgelesen werden. Die Glaskeramik-Kochfläche zeigt weiterhin eine gegenüber bekannten, im sichtbaren dunkel eingefärbten und nicht oder nur wenig streuenden LAS-Glaskeramiken erhöhte Transmission im infraroten Wellenlängenbereich, insbesondere in einem Wellenlängenbereich zwischen 2900nm und 4200nm, wie dies bisher nur für stark streuende Glaskeramik-Kochflächen mit hohem KMK-Phasenanteil bekannt war. Durch diese hohe IR-Transmission ist es möglich, mit Hilfe des Infrarot-Sensors die Temperatur eines auf die Glaskeramik-Kochfläche im Bereich der Kochzone aufgestellten Kochgeschirrs, beispielsweise eines Kochtopfs, auch bei niedrigen Temperaturen berührungslos und durch die Glaskeramik-Kochfläche hindurch zu messen. Die Temperatur des Kochgeschirrs korreliert ausreichend genau mit der Temperatur eines darin befindlichen Kochgutes, um einen automatisierten Kochbetrieb zu ermöglichen. Bei einem solchen automatisierten Kochbetrieb wird die Leistung eines Heizkörpers der Kochmulde in Abhängigkeit von dem ausgegebenen Meßsignal des Infrarot-Sensors derart geregelt, dass sich die gewünschte Kochguttemperatur einstellt. Wegen der hohen Transparenz der Glaskeramik-Kochfläche im Infrarotbereich gelangt auch bei niedrigen Temperaturen des Kochgeschirrs, wie sie beispielsweise beim Fortkochen auftreten, genügend Wärmestrahlung durch die Glaskeramik-Kochfläche hindurch zu dem Infrarot-Sensor, um eine verlässliche Temperaturmessung durchführen zu können. Vorteilhaft müssen daher keine störenden Infrarot-Sensoren oberhalb der Kochmulde angeordnet und auf das Kochgeschirr ausgerichtet werden, um eine exakte Regelung der Kochguttemperatur zu ermöglichen.

Neben der eigentlichen Funktion des Infrarot-Sensors, nämlich einen automatisierten Kochbetrieb zu bewerkstelligen, kann der Sensor auch den Fehlbetrieb der Kochmulde bspw. Bei einem leerkochenden oder vergessenen Topf erkennen und das Gerät bei Erreichen einer kritischen Temperatur abregeln oder ausschalten und ggf. für den Benutzer einen Warnton initiieren.

Entsprechend einer besonders bevorzugten Ausgestaltungsvariante der Erfindung kann es vorgesehen sein, dass die Glaskeramik-Kochfläche eine Dicke in einem Bereich zwischen 2,8mm und 4,2mm, bevorzugt zwischen 2,8mm und 3,5mm, besonders bevorzugt zwischen 2,8mm und 3,2mm aufweist. Wie sich überraschend gezeigt hat, weist die Glaskeramik-Kochfläche in der genannten Zusammensetzung und dem beschriebenen Schichtaufbau eine gegenüber bekannten LAS-Glaskeramik-Kochflächen erhöhte Festigkeit auf. Daher kann die Dicke der Glaskeramik-Kochfläche, die üblicherweise bei 4mm liegt, reduziert werden, wobei weiterhin die relevanten Normvorgaben (EN 60335, UL 858, CSA 22.2) zur erforderlichen Stoßfestigkeit von Glaskeramik-Kochmulden eingehalten werden. Die reduzierte Dicke der Glaskeramik-Kochfläche führt zu wesentlichen Verbesserungen bezüglich der Regeleigenschaften der Kochmulde. Zunächst sinken bei geringerer Glaskeramik-Dicke die Absorptionsverluste im infraroten Bereich. Dadurch kann die Genauigkeit der berührungslosen Temperaturmessung mit Hilfe des Infrarot-Sensors und damit die Genauigkeit der Temperaturregelung des Kochgutes verbessert werden. Gleichzeitig wird die Energieübertragung durch Wärmestrahlung von einem Heizkörper auf das Kochgeschirr verbessert. Die thermische Masse der zwischen dem Heizkörper und dem aufgestellten Kochgeschirr angeordneten Glaskeramik wird verringert. Weiterhin verringern sich der Temperaturunterschied und damit die Temperatur an der Unterseite der Glaskeramik-Kochfläche, welche erforderlich sind, um eine bestimmte Leistung über Wärmeleitung durch die Glaskeramik zu transportieren. Beide Effekte führen dazu, dass bei einer gewünschten Änderung der Kochguttemperatur eine geringere Wärmemenge in die Glaskeramik eingetragen bzw. aus dieser abgeleitet werden muss, so dass sich ein schnelleres Regelverhalten ergibt. Eine weitere Verbesserung des Regelverhaltens ergibt sich dadurch, dass sich eine Temperaturänderung auf der Unterseite der Glaskeramik-Kochfläche bei einer dünneren Kochfläche schneller auf die Temperatur der Oberseite auswirkt als bei einer dickeren Kochfläche. Alle diese Effekte führen somit zu einer verbesserten Regelbarkeit der Kochguttemperatur im automatischen Kochbetrieb.

Die verringerte Dicke der Glaskeramik führt auch zu verminderten Energieverlusten, da zum einen die Verluste durch Wärmequerleitung und Speicherung innerhalb der Glaskeramik-Kochfläche proportional zur eingesparten Dicke reduziert werden und zum anderen auf Grund der reduzierten Temperaturen an der Glaskeramik-Unterseite geringere Verluste durch Wärmeleitung, Wärmestrahlung und Konvektion auftreten. Durch die Verwendung einer dünneren Kochfläche können somit sowohl das Regelverhalten als auch die Energieverluste positiv beeinflusst werden.

Eine genaue berührungslose Messung der Temperatur eines aufgestellten Kochgeschirrs mittels eines Infrarot-Sensors kann dann erfolgen, wenn die Glaskeramik-Kochfläche, bezogen auf eine Dicke von 4mm, bei einer Wellenlänge von 3000nm eine Transmission größer 5%, vorzugsweise größer 7%, aufweist und/oder dass sie bei einer Wellenlänge von 3200nm eine Transmission größer 18%, vorzugsweise größer 24%, aufweist und/oder dass sie bei einer Wellenlänge von 3400nm eine Transmission größer 37%, vorzugsweise größer 43%, aufweist und/oder dass sie bei einer Wellenlänge von 3600nm eine Transmission größer 51%, vorzugsweise größer 54%, aufweist.

Um eine empfindliche Messung der von einem Kochgeschirr ausgesendeten Wärmestrahlung und damit eine genaue Temperaturmessung zu ermöglichen, muss der verwendete Infrarot-Sensor an das Emissionsspektrum des Kochgeschirrs und an das Transmissionsfenster der Glaskeramik-Kochfläche angepasst sein. Dies kann dadurch erreicht werden, dass der Infrarot-Sensor eine spektrale Empfindlichkeit in einem Wellenlängenbereich zwischen 2800nm und 4400nm, bevorzugt zwischen 3400nm und 4000nm, besonders bevorzugt bei 3600nm, aufweist.

Eine genaue Temperaturmessung für aus verschiedenen Materialien hergestellte Kochgeschirre kann dadurch ermöglicht werden, dass die Elektronik dazu ausgelegt ist, einen Emissionskoeffizienten eines aufgestellten Kochgeschirrs bei der Leistungsregelung des zumindest einen Heizkörpers zu berücksichtigen. Der Emissionskoeffizient kann fest in der Elektronik vorgegeben sein, beispielsweise mit 1 für einen schwarzen Strahler oder mit einem beliebigen anderen Wert für einen grauen Strahler. Es kann jedoch auch vorgesehen sein, dass der Emissionskoeffizient von einem Benutzer in Abhängigkeit von einem verwendeten Topfmaterial eingegeben wird. Dies kann beispielsweise über die Auswahl eines Topfmaterials aus einer vorgegebenen Liste erfolgen.

Um eine räumliche Trennung zwischen dem Infrarot-Sensor und dem Heizkörper zu erreichen und damit einer Überhitzung des Infrarot-Sensors vorzubeugen kann es vorgesehen sein, dass die Wärmestrahlung eines aufgestellten Kochgeschirrs zumindest entlang eines Abschnitts der Übertragungsstrecke von einem Leiter für elektromagnetische Strahlung zu dem Infrarot-Sensor geleitet ist. Bei dem Leiter kann es sich beispielsweise um einen temperaturbeständigen und im infraroten Bereich hoch transparenten Stab, beispielsweise aus Glas, oder um entsprechende Fasern handeln. Ein Teil der von dem Kochgeschirr ausgehenden Wärmestrahlung wird an einem Ende in den Leiter eingekoppelt, durch Totalreflexion innerhalb des Leiters geführt und am gegenüberliegenden Ende zum Infrarot-Sensor hin ausgekoppelt.

Vorteilhaft kann es vorgesehen sein, dass der Messbereich des Infrarot-Sensors auf einen Boden oder auf eine Seitenfläche eines aufgestellten Kochgeschirrs ausgerichtet ist. Sowohl die Temperatur des Bodens als auch der Seitenfläche korrelieren gut mit der Temperatur des Kochgutes, so dass eine automatische Regelung der Kochguttemperatur ermöglicht wird. Bei einer Ausrichtung des Messbereichs auf die Seitenfläche ist der Infrarot-Sensor oder der zugehörige Leiter für elektromagnetische Strahlung vorzugsweise entsprechend schräg unter der Glaskeramik-Kochfläche angeordnet. Durch diese Anordnung wird Wärmestrahlung aufgefangen, welche von der Gefäßwand des aufgestellten Kochgeschirrs außerhalb der Kochzone und damit im Kaltbereich durch die Glaskeramik-Kochfläche dringt. Störungen der Temperaturmessung von durch die Glaskeramik-Kochfläche selbst abgestrahlter Wärmestrahlung können so vermieden werden.

Besonders bevorzugt kann es vorgesehen sein, dass die Glaskeramik-Kochfläche beidseitig mit einer glatten Oberfläche ausgeführt ist. Auf Grund der erhöhten Festigkeit der Glaskeramik-Kochfläche ist eine übliche Noppenstruktur auf der Glaskeramik-Unterseite zur Steigerung der Festigkeit nicht mehr erforderlich. Die beidseitig glatte Oberfläche ermöglicht eine bessere Fokussierung des Messflecks des Infrarot-Sensors auf der Oberfläche des aufgestellten Kochgeschirrs und damit eine genauere Messung von dessen Temperatur.

Eine schnelle Regelung der Temperatur des Kochgutes kann dadurch erreicht werden, dass an einer Unterseite der Glaskeramik-Kochfläche zumindest ein Strahlungsheizkörper und/oder ein Halogenheizkörper und/oder ein Induktionsheizkörper angeordnet ist oder dass der zumindest eine Heizkörper durch eine elektrische Widerstandsbeheizung gebildet ist und dass Leiterbahnen der Widerstandsbeheizung mittelbar oder unmittelbar stoffschlüssig mit der Glaskeramik-Kochfläche verbunden sind.

Besonders wünschenswert ist ein automatisierter Kochvorgang während des Fortkochens. Beim Fortkochen wird das Kochgut zumeist über einen längeren Zeitraum bei vergleichsweise niedrigen Temperaturen gegart. Entsprechend sind auch die Temperatur des Kochgeschirrs und damit die emittierte Wärmestrahlung gering. Auf Grund der hohen Transparenz der Glaskeramik-Kochfläche im infraroten Wellenlängenbereich gelangt jedoch auch bei niedrigen Temperaturen ein messbarer Anteil an Wärmestrahlung durch die Glaskeramik-Kochfläche hindurch zu dem Infrarot-Sensor. Um ein automatisches Fortkochen zu ermöglichen kann es vorgesehen sein, dass der Infrarot-Sensor und die Elektronik für eine Regelung ab einer Temperatur eines aufgestellten Kochgeschirrs von zumindest 90°C, vorzugsweise von zumindest 70°C, ausgelegt sind.

Ein zusätzlicher Nutzen der Temperaturmessung kann dadurch erreicht werden, dass in Abhängigkeit von dem Signal des Infrarot-Sensors ein außerhalb der Kochmulde angeordnetes elektrisches Gerät, insbesondere eine Dunstabzugshaube, ansteuerbar ist. So kann beispielsweise die Dunstabzugshaube ab einer bestimmten Temperatur des Kochgeschirrs bzw. des Kochgutes eingeschaltet werden. Weiterhin kann die Leistungsstufe der Dunstabzugshaube in Abhängigkeit von der Temperatur des Kochgeschirrs bzw. des Kochgutes automatisch eingestellt werden.

Um eine hohe Festigkeit der Glaskeramik-Kochfläche beispielsweise im Bereich einer umlaufenden Facette zu erhalten kann es vorgesehen sein, dass die Dicke der Glaskeramik-Kochfläche bereichsweise verringert ist und dass die Gradientenschicht innerhalb und/oder außerhalb der Bereiche mit der reduzierten Dicke ausgebildet ist.

Eine hohe Festigkeit von gebogenen Glaskeramik-Kochflächen kann dadurch erreicht werden, dass die Glaskeramik-Kochfläche gebogen und/oder dreidimensional verformt ist und dass die Gradientenschicht innerhalb und/oder außerhalb der Biegung und/oder der dreidimensionalen Verformung ausgebildet ist.

Zur Durchführung von Knebeln oder von Gasbrennern können Bohrungen in der Glaskeramik-Kochfläche vorgesehen sein. Durchbrüche oder Ausschnitte in der Kochfläche können auch für die Ab- und Zuluftführung oder die Montage von Abzügen vorgesehen sein. In diesen Fällen können diese rund, oval oder rundeckig ausgeführt sein. Um auch hier eine erhöhte Festigkeit der Glaskeramik-Kochfläche zu erreichen, welches erlaubt, ihre Dicke mit den beschriebenen Vorteilen zu reduzieren, kann es vorgesehen sein, dass die Glaskeramik-Kochfläche zumindest einen Durchbruch, insbesondere eine Bohrung, aufweist und dass die Gradientenschicht bis an den Rand des Durchbruchs ausgebildet ist und/oder dass die Gradientenschicht an der Wandung des Durchbruchs ausgebildet ist. Diese Maßnahmen führen zu einer erhöhten Bohrrandfestigkeit. Bohrungen können dichter aneinander oder an den Rand der Glaskeramik-Kochfläche gelegt werden, was zu neuen Gestaltungsmöglichkeiten für die Kochmulde führt.

Um Anzeigen und Leuchtelemente klar darstellen zu können kann es vorgesehen sein, dass, jeweils normiert auf eine 4mm dicke Glaskeramik-Kochfläche, der maximale Streulichtanteil ("Haze") bei einer Wellenlänge von 470nm höchstens 15%, vorzugsweise höchstens 12%, beträgt und/oder dass der maximale Streuanteil in einem Wellenlängenbereich von 400nm bis 500nm höchstens 20%, vorzugsweise höchstens 17%, beträgt. Der Streulichtanteil wird bestimmt, indem für eine Probe, im vorliegenden Fall eine Glaskeramik-Probe mit einer Dicke von 4 mm, in einer Ulbricht-Kugel die Intensität des gesamten gestreuten Lichts bestimmt und dieses im Vergleich zur ursprünglichen Intensität des Ausgangsstrahles gesetzt wird. Die Glaskeramik-Kochfläche der erfindungsgemäßen Kochmulde unterscheidet sich damit insbesondere von bekannten Glaskeramik-Kochflächen mit einem hohen Keatitmischkristall-Anteil, welche auf Grund einer großen Anzahl an Streuzentren transluzent bis opak erscheinen und damit für die Verwendung zumindest von Anzeigen nicht geeignet sind.

Um beispielsweise eine störende Sicht auf die technischen Bauelemente der Kochmulde unter der Glaskeramik-Kochfläche zu verhindern und um eine Blendwirkung durch strahlende Heizkörper, insbesondere helle Halogen-Heizkörper, zu vermeiden kann es vorgesehen sein, dass, jeweils normiert auf eine 4mm dicke Glaskeramik-Kochfläche, der Lichttransmissionsgrad gemäß DIN EN 410, 1998 im Wellenlängenbereich von 380nm bis 780nm, bestimmt für die Normlichtart D 65, kleiner oder gleich 5% ist und dass der spektrale Transmissionsgrad gemäß DIN 5036-1, 1978-07, bestimmt in einem Messverfahren gemäß DIN EN 410, 1998 bzw. ISO 15368, 2001-08, bei einer Wellenlänge von 420nm vorzugsweise größer als 0,2% ist. Bei einem so eingestellten Transmissionsgrad wirkt die Glaskeramik-Kochfläche in Aufsicht schwarz. Unter der Glaskeramik-Kochfläche angeordnete Anzeigen und Leuchtelemente können jedoch gut durch die Glaskeramik hindurch erkannt und abgelesen werden. Auch können betriebene Heizkörper in ausreichender Helligkeit wahrgenommen werden.

Es ist weiterhin auch möglich, die Glaskeramik-Platte auch für eine Reihe von anderen Vorrichtungen einzusetzen, bei welchen der Wärmeübergang verbunden mit einer verbesserten Sensorik vorteilhaft ausgenutzt werden kann. Beispielhaft kann die Glaskeramik eingesetzt werden als Sohle in einem Bügeleisen oder als Trennelement in einem Toaster, wobei die Glaskeramik-Platte angeordnet ist zwischen der Heizung und einem Nutzraum des Toasters oder dass die Glaskeramik als Abdeckung für eine Heizung ausgebildet ist. Weiterhin auch möglich ist die Verwendung solcher Glaskeramiken als Gasbrennerdeckel in einem Gasherd oder als Backschale.

Die Erfindung wird nachfolgend anhand von Ausführungsbeispielen und unter Bezugnahme auf die beigeschlossenen Figuren weiter erläutert. In den Figuren bezeichnen gleiche Bezugszeichen gleiche oder entsprechende Elemente. Es zeigen:

Fig. 1 ein erstes Diagramm mit Transmissionskurven zweier bekannter Glaskeramiken,

Fig. 2 ein zweites Diagramm mit Transmissionskurven einer bekannten und einer erfindungsgemäßen Glaskeramik-Kochfläche sowie Leistungskurven einer von einem schwarzen Strahler emittierten Wärmestrahlung,

Fig. 3 einen Ausschnitt einer Kochmulde mit einer Glaskeramik-Kochfläche und einem Infrarot-Sensor,

Fig. 4 die in Fig. 3 gezeigte Kochmulde mit einer alternativen Anordnung des Infrarot-Sensors,

Fig. 5 die in den Fig. 3 und 4 gezeigte Kochmulde mit einer weiteren Anordnung des Infrarot-Sensors,

Fig. 6 ein drittes Diagramm zu einem Überschwingverhalten beim Ankochen von Wasser als Kochgut,

Fig. 7 ein viertes Diagramm zur Ermittlung der Ankochdauer für Wasser als Kochgut,

Fig. 8 ein fünftes Diagramm zum Abkühlverhalten von Glaskeramik-Kochflächen,

Fig. 9 einen Rand einer Glaskeramik-Kochfläche mit einer angebrachten Facette in einer Seitenansicht und

Fig. 10 eine gebogene Glaskeramik-Kochfläche in einer Seitenansicht.

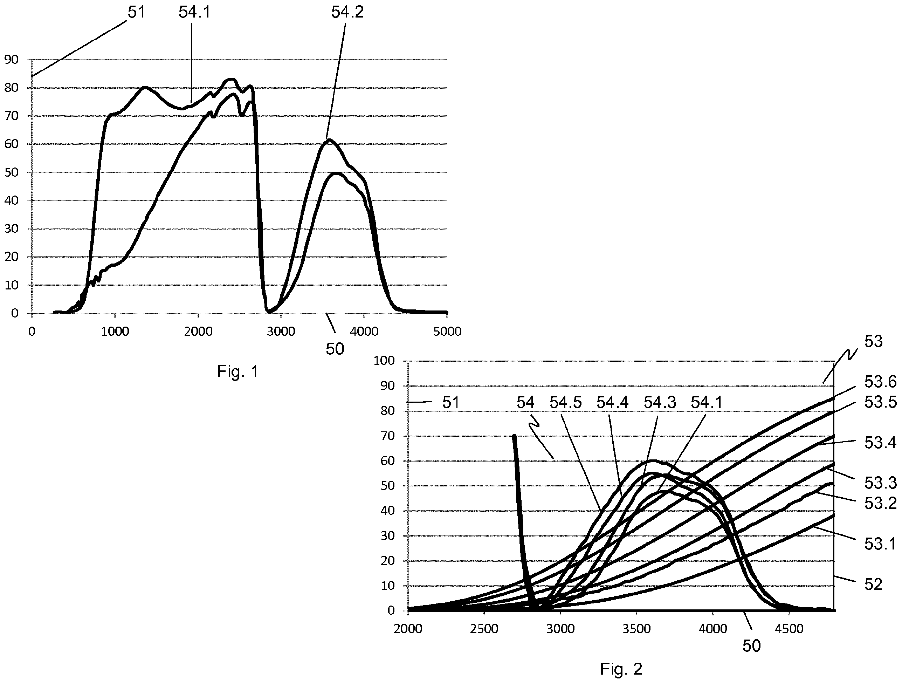

Fig. 1 zeigt ein erstes Diagramm mit Transmissionskurven 54.1, 54.2 zweier bekannter Glaskeramiken. Dazu sind entlang einer X-Achse (50) eine Wellenlänge in nm und entlang einer Y-Achse (51) eine Transmission in Prozent aufgetragen.

Beide Transmissionskurven 54.1, 54.2 gelten für Glaskeramiken mit einer Dicke von 4mm. Die erste Transmissionskurve 54.1 ist einer ersten, im sichtbaren Bereich eingefärbten und transparenten LAS-Glaskeramik mit Hochquarz-Mischkristallen (HQMK) als Hauptkristallphase, wie sie beispielsweise unter dem Handelsnamen CERAN HIGHTRANS® vertrieben wird, zugeordnet. Die zweite Transmissionskurve 54.2 wurde an einer weißen, im sichtbaren Bereich opaken bzw. transluzenten zweiten Glaskeramik mit Keatitmischkristallen (KMK) als Hauptkristallphase ermittelt. Eine solche Glaskeramik ist beispielsweise unter dem Handelsnamen CERAN ARTICFIRE® bekannt.

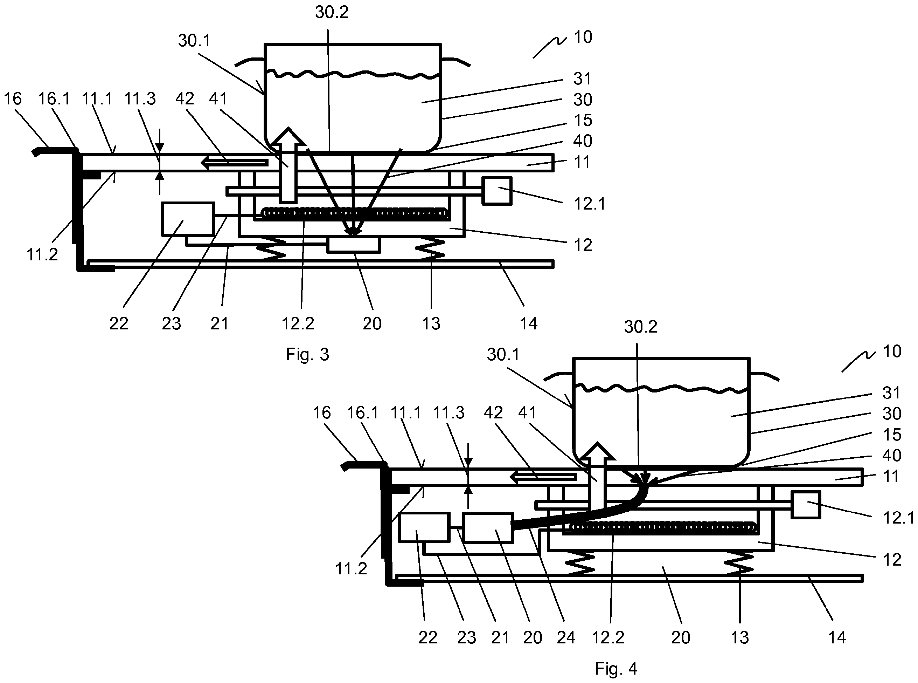

In einem Wellenlängenbereich zwischen ca. 3000nm und 4500nm zeigt die im sichtbaren Bereich opake zweite Glaskeramik eine höhere Transparenz als die im sichtbaren Bereich transparente erste Glaskeramik. Eine solch hohe Transparenz im IR-Bereich ermöglicht durch die Glaskeramik hindurch eine berührungslose, optische Temperaturmessung an einem auf die zweite Glaskeramik aufgestellten Kochgeschirr 30, wie es in den Figuren 3-5 gezeigt ist. Diese erfolgt vorteilhaft mittels eines geeigneten Infrarot-Sensors 20, wie er ebenfalls zu den Figuren 3-5 näher beschrieben ist. Mit Hilfe einer solchen Temperaturmessung kann ein automatisierter Kochbetrieb durchgeführt werden. Die Transparenz der ersten Glaskeramik im Bereich zwischen 3000nm und 4500nm ist hingegen nicht ausreichend, um auch bei niedrigen Temperaturen des Kochgeschirrs eine ausreichend genaue Temperaturmessung zu ermöglichen.

Demnach ist es mit bekannten Glaskeramiken, wie sie derzeit für in den Figuren 3-5 gezeigte Glaskeramik-Kochflächen 11 eingesetzt werden, nicht möglich, gleichzeitig eine im sichtbaren Bereich nicht streuende, dunkel gefärbte und transparente Glaskeramik-Kochfläche 11 bereitzustellen, welche die Anzeige von unter der Glaskeramik angeordneten Anzeigeelementen und gleichzeitig eine genaue berührungslose Temperaturmessung mittels eines Infrarotsensors und damit eine automatisierte Kochstellenregelung ermöglicht.

Fig. 2 zeigt ein zweites Diagramm mit Transmissionskurven 54 einer bekannten und einer erfindungsgemäßen Glaskeramik-Kochfläche 11 sowie Leistungskurven 53 einer von einem schwarzen Strahler bei verschiedenen Temperaturen emittierten Wärmestrahlung.

Die Transmissionskurven 54 sind gegenüber der X-Achse 50 und der Y-Achse 51 aufgetragen, die Leistungskurven 53 gegenüber der X-Achse 50 und einer zweiten Y-Achse 52. Dabei ist auf der X-Achse 50 eine Wellenlänge in nm, auf der Y-Achse 51 eine Transmission in Prozent und auf der zweiten Y-Achse 52 eine Strahlungsleistung je Wellenlängenbereich aufgetragen.

Die erste Transmissionskurve 54.1 entspricht einer bekannten 4, mm starken, im sichtbaren Wellenlängenbereich dunkel gefärbten und nicht streuenden ersten LAS- Glaskeramik, wie sie bereits zu Fig. 1 gezeigt ist. Die dritte Transmissionskurve 54.3 zeigt das Transmissionsverhalten der bekannten ersten Glaskeramik bei einer auf 3,2mm reduzierten Dicke. Eine vierte Transmissionskurve 54.4 wurde an einer erfindungsgemäßen Glaskeramik-Kochfläche 11 mit einer in den Figuren 3-5 gezeigten Dicke 11.3 von 4 mm gemessen, während eine fünfte Transmissionskurve 54.5 die wellenlängenabhängige Transmission der erfindungsgemäßen Glaskeramik-Kochfläche 11 bei einer Dicke 11.3 von 3,2mm zeigt.

Die erfindungsgemäße Glaskeramik-Kochfläche 11 weist eine folgende, in Gewichtsprozent angegebene Zusammensetzung auf:

| | |
|---|---|
| $Al_2O_3$ | 18 - 23 |
| $Li_2O$ | 2,5 - 4,2 |
| $SiO_2$ | 60 - 69 |
| $ZnO$ | 0 - 2 |
| $Na_2O + K_2O$ | 0,2 - 1,5 |
| $MgO$ | 0 - 1,5 |
| $CaO + SrO + BaO$ | 0 - 4 |
| $B_2O_3$ | 0 - 2 |
| $TiO_2$ | 2,3 - 4,5 |
| $ZrO_2$ | 0,5 - 2 |
| $P_2O_5$ | 0 - 3 |
| $SnO_2$ | 0 - <0,6 |
| $Sb_2O_3$ | 0 - 1,5 |
| $As_2O_3$ | 0 - 1,5 |
| $TiO_2 + ZrO_2 + SnO_2$ | 3,8 - 6 |
| $V_2O_5$ | 0,01 - 0,08 |
| $Fe_2O_3$ | 0,008 - 0,3 |

Zusätzlich können weitere Farboxide bis zu einem Anteil von maximal 1,0 Gewichtsprozent enthalten sein. Dabei sind der $Li_2O$-Anteil vorzugsweise auf einen Bereich von 3,0 bis 4,2 Gewichtsprozent, der $TiO_2$-Gehalt vorzugsweise auf einen Bereich von 2,3 bis 4,0 Gewichtsprozent und der $Fe_2O_3$-Anteil auf 0,03 bis 0,2 Gewichtsprozent begrenzt.

Das bevorzugte glaskeramische Material sowie die hiermit erhaltene Glaskeramik der Glaskeramik-Kochfläche ist bevorzugt Arsen-frei und Antimon-frei.

Das bevorzugte glaskeramische Material sowie die hiermit erhaltene Glaskeramik der Glaskeramik-Kochfläche ist bevorzugt zinnhaltig.

Zur Herstellung der erfindungsgemäßen Glaskeramik-Kochfläche 11 wird zunächst ein Grünglas in der oben genannten Zusammensetzung geschmolzen, in die gewünschte Plattenform verformt und entsprechend zugeschnitten. Während eines nachfolgenden Keramisierungsprozesses wird ein vorkristallisiertes glaskeramisches Zwischenerzeugnis mit Hochquarzmischkristall (HQMK) als vorherrschender Kristallphase hergestellt. Durch einen weiteren Kristallumwandlungsschritt wird die HQMK-Phase teilweise in eine Keatitmischkristallphase umgewandelt. Dieser Umwandlungsschritt erfolgt bei einer Maximaltemperatur $T_{max}$, die über eine vorgegebene Haltezeit $t(T_{max})$ gehalten wird. Geeignete Haltezeiten und Maximaltemperaturen sind durch einen Temperatur-Zeit-Bereich vorgegeben, der von vier Geraden begrenzt wird. Die Geraden verbinden dabei Eckpunkte des Temperatur-Zeit-Bereichs mit den Wertepaaren ($T_{max}$ = 910°C; $t(T_{max})$ = 25 Minuten), ($T_{max}$ = 960°C; $t(T_{max})$ = 1 Minute), ($T_{max}$ = 980°C; $t(T_{max})$ = 1 Minute) und ($T_{max}$ = 965°C; $t(T_{max})$ = 25 Minuten).

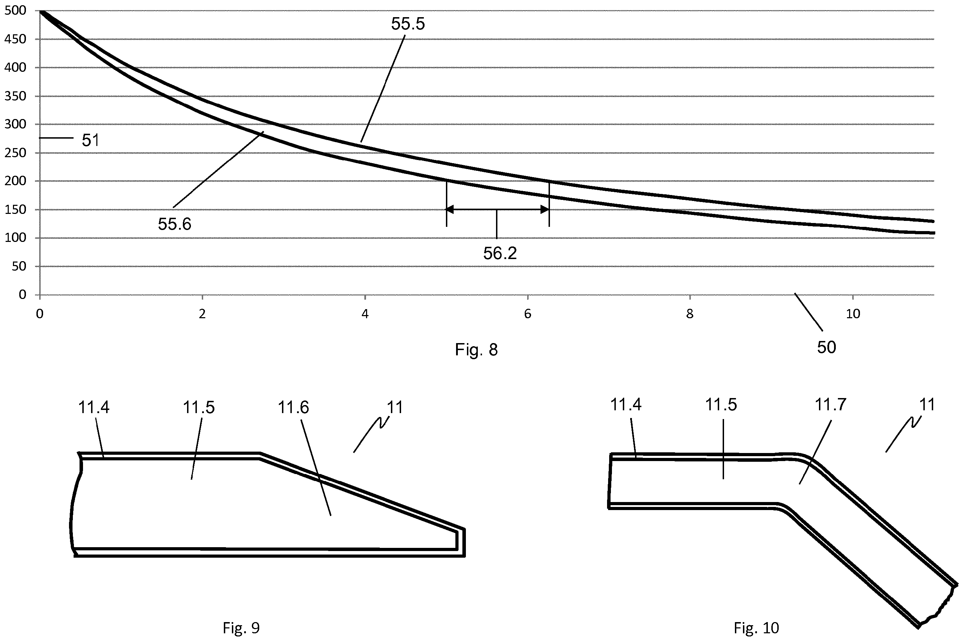

Durch die Zusammensetzung und das beschriebene Herstellungsverfahren wird eine Glaskeramik-Kochfläche 11 mit einer Gradientenschicht 11.4 und einem darunterliegenden Kern 11.5 erhalten, wie dies in den Figuren 9 und 10 angedeutet ist. Im Kern 11.5 liegt Keatitmischkristall (KMK) als vorherrschende Kristallphase vor. Die Gradientenschicht 11.4 weist Hochquarzmischkristall (HQMK) als vorherrschende Kristallphase auf. Ausgehend von der Oberfläche der Glaskeramik-Kochfläche 11 übersteigt der KMK-Kristallphasenanteil in eine Tiefe von 10 $\mu$m oder mehr 50 % der Summe der HQMK- und KMK-Kristallphasenanteile. Über der Gradientenschicht ist vorzugsweise noch eine amorphe Schicht angeordnet.

Die so hergestellte Glaskeramik-Kochfläche 11 weist bei gleicher Dicke 11.3 eine gegenüber bekannten Glaskeramik-Kochflächen 11 auf LAS-Basis erhöhte Festigkeit sowie eine geeignete Einfärbung im sichtbaren Wellenlängenbereich bei zugleich niedriger Streuung (Haze) auf. Wie der Vergleich der vierten Transmissionskurve 54.4 mit der ersten Transmissionskurve 54.1 für 4mm dicke Glaskeramik-Kochflächen 11 sowie der Vergleich der fünften Transmissionskurve 54.5 mit der dritten Transmissionskurve 54.3 zeigt, weist die erfindungsgemäße Glaskeramik-Kochfläche 11 in einem Wellenlängenbereich zwischen 2800nm und 4600nm eine deutlich höhere Transparenz auf als die bekannte erste Glaskeramik. Dabei zeigen nicht dargestellt beide Glaskeramiktypen im sichtbaren Bereich vergleichbare Eigenschaften bezüglich Einfärbung, Transparenz und Streuung.

Die Leistungskurven 53 zeigen die auf einen jeweiligen Wellenlängenbereich bezogene Strahlungsleistung eines schwarzen Körpers bei verschiedenen Temperaturen. Der schwarze Körper steht dabei stellvertretend für ein auf eine Glaskeramik-Kochfläche 11 aufgestelltes Kochgeschirr 30, wie es in den Figuren 3 bis 5 gezeigt ist. Dabei weist beispielsweise ein aus einem gusseisernen Material hergestelltes Kochgeschirr 30 in etwa die Strahlungscharakteristik eines schwarzen Körpers auf. Eine erste Leistungskurve 53.1 zeigt den wellenlängenabhängigen Verlauf der Strahlungsleistung des schwarzen Körpers bei der Temperatur von 70 °C. Entsprechend zeigt eine zweite Leistungskurve 53.2 den Verlauf bei 100 °C, eine dritte Leistungskurve 53.3 den Verlauf bei 120 °C, eine vierte Leistungskurve 53.4 den Verlauf bei 150 °C, eine fünfte Leistungskurve 53.5 den Verlauf bei 180 °C und eine sechste Leistungskurve 53.6 den Verlauf bei 200 °C.

Fig. 3 zeigt einen Ausschnitt einer Kochmulde 10 mit einer Glaskeramik-Kochfläche 11 und einem Infrarot-Sensor 20.

Ein Heizkörper 12, der im vorliegenden Ausführungsbeispiel als Strahlungsheizkörper ausgeführt ist, ist mittels Federelementen 13, welche sich an einem Kochmuldenboden 14 abstützen, gegen eine Unterseite 11.2 der Glaskeramik-Kochfläche 11 angedrückt. Der Heizkörper 12 weist eine Heizwendel 12.2 sowie einen Schutztemperaturbegrenzer 12.1 auf. Der Schutztemperaturbegrenzer 12.1 unterbricht die Stromzufuhr zu der Heizwendel 12.2, wenn die Temperatur der Glaskeramik-Kochfläche 11 einen vorgegebenen Schwellwert überschreitet. Der Heizkörper 12 definiert einen Heißbereich, der auf einer Oberseite 11.1 der Glaskeramik-Kochfläche 11 als Kochzone 15 markiert ist. Das Kochgeschirr 30 ist vorliegend in Form eines Topfes im Bereich der Kochzone 15 mit seinem Boden 30.2 auf die Glaskeramik-Kochfläche 11 aufgestellt. Das Kochgeschirr 30 ist teilweise mit einem Kochgut 31, im gezeigten Ausführungsbeispiel mit Wasser, gefüllt. Die Wandung des Kochgeschirrs 30 bildet nach außen hin eine umlaufende Seitenfläche 30.1 aus. Durch den Heizkörper 12 wird das Kochgeschirr 30 und das darin aufbewahrte Kochgut 31 aufgeheizt, wie dies durch einen dargestellten Energiefluss 41 symbolisiert ist. Der Energiefluss 41 setzt sich dabei vorwiegend aus von der Heizwendel 12.2 ausgesandte Strahlungsenergie sowie im Bereich der Glaskeramik-Kochfläche 11 durch Wärmeleitung übertragene Energie zusammen. Bei der Energieübertragung von dem Heizkörper 12 zu dem Kochgeschirr 30 treten Energieverluste 42 auf, wie sie hier am Beispiel einer Wärmequerleitung innerhalb der Glaskeramik-Kochfläche 11 gezeigt sind. Die Glaskeramik-Kochfläche 11 weist eine durch einen Doppelpfeil markierte Dicke 11.3 auf. Sie ist in diesem Beispiel mit einem flexiblen Klebstoff 16.1 in einen Rahmen 16 der Kochmulde 10 eingeklebt. Der Rahmen 16 ist mit dem Kochmuldenboden 14 verbunden.

Innerhalb der Kochmulde 10 und unterhalb des Heizkörpers 12 ist der Infrarot-Sensor 20 angeordnet. Ein Messbereich des Infrarot-Sensors 20 ist durch eine entsprechende Ausnehmung im Heizkörperboden und durch die Glaskeramik-Kochfläche 11 hindurch in den Bereich der Kochzone 15 geführt. Von dem Boden 30.2 des in der Kochzone 15 aufgestellten Kochgeschirrs 30 ausgehende Wärmestrahlung 40 kann so zu dem Infrarot-Sensor 20 gelangen. Nicht dargestellt kann es vorgesehen sein, dass die Wärmestrahlung 40 des Kochgeschirrs 30 innerhalb eines zur Umgebung hin abgeschatteten Bereichs zu dem Infrarot-Sensor 20 geführt ist. Störeinflüsse durch Fremdstrahlung können so vermieden werden.

Der Infrarot-Sensor 20 ist über eine Signalleitung 21 mit einer Elektronik 22 verbunden. Die Elektronik 22 versorgt den Heizkörper 12 über eine Kabelverbindung 23 mit elektrischer Energie.

Im Kochbetrieb heizt sich das Kochgeschirr 30 auf. Dadurch steigt die Leistung der von dem Kochgeschirr 30 emittierten Wärmestrahlung 40, wie dies in Figur 2 durch die Leistungskurven 53 entsprechend des Strahlungsgesetzes von Planck für einen schwarzen Körper gezeigt ist. Die Wärmestrahlung 40 wird von dem Infrarot-Sensor 20 empfangen und in ein vorzugsweise proportionales Messsignal umgewandelt. Dieses Meßsignal wird über die Signalleitung zur Elektronik 22 geleitet. Die Elektronik 22 regelt die Leistungsabgabe an den Heizkörper 12 derart, dass sich eine gewünschte Temperatur des Bodens 30.2 des Kochgeschirrs 30 einstellt. Aufgrund der guten Wärmeleiteigenschaften der für Kochgeschirre 30 verwendeten Materialien korreliert die Temperatur des Kochgeschirrs 30 gut mit der des darin befindlichen Kochgutes 31. Die Anordnung ermöglicht somit einen Regelkreis, bei dem eine gewünschte Temperatur des Kochgutes 31 automatisch eingeregelt werden kann.

Der verwendete Infrarot-Sensor 20 weist seine größte Empfindlichkeit in einem Wellenlängenbereich zwischen 2800nm und 3200nm auf. In diesem Wellenlängenbereich ist, wie durch die in Figur 2 dargestellten Leistungskurven 53 gezeigt, die Leistung der von dem Kochgeschirr 30 bei niedrigen Temperaturen emittierten Wärmestrahlung noch sehr gering. Ist die Glaskeramik-Kochfläche 11 aus der bekannten ersten Glaskeramik mit einer Dicke 11.3 von 4mm gebildet, so weist die Glaskeramik-Kochfläche 11 in dem Empfangsbereich des Infrarot-Sensors 20 eine hohe Absorption auf, wie dies durch die zugehörige erste Transmissionskurve 54.1 in Fig. 2 gezeigt ist. Es wird somit ein hoher Anteil der ohnehin geringen, von dem Kochgeschirr 30 ausgehenden Wärmestrahlung 40 absorbiert. Eine Messung der Temperatur des Kochgeschirrs 30 und damit des Kochgutes 31 ist somit bei Verwendung der bekannten zweiten Glaskeramik nicht möglich. Eine Reduzierung der Dicke 11.3 der Glaskeramik-Kochfläche 11 auf 3,2 mm führt hier zu einer Verbesserung, wie dies anhand der dritten Transmissionskurve 54.3 zu erkennen ist. Eine aus bekanntem Glaskeramikmaterial hergestellte Glaskeramik-Kochfläche 11 in dieser reduzierten Dicke 11.3 genügt jedoch nicht mehr den Anforderungen entsprechend der relevanten Normen (z.B. EN 60335, UL 858, CSA 22.2) bezüglich der erforderlichen Stoßfestigkeit.

Wie in Figur 2 durch die vierte Transmissionskurve 54.4 gezeigt, weist die erfindungsgemäße Glaskeramik-Kochfläche 11 im Bereich der maximalen Empfindlichkeit des verwendeten Infrarot-Sensors 20 eine gegenüber der bekannten Glaskeramik deutlich verbesserte Transmission auf.

Bei einer solchen erfindungsgemäßen Glaskeramik-Kochfläche 11 gelangt somit auch bei einer Dicke 11.3 der Glaskeramik-Kochflächen 11 von 4 mm und niedrigen Temperaturen des Kochgeschirrs 30 eine ausreichende Menge von Wärmestrahlung 40 von dem Kochgeschirr 30 zu dem Infrarot-Sensor 20, um eine exakte und zuverlässige Temperaturregelung zu ermöglichen. Erfindungsgemäß kann das Ansprechverhalten des Infrarot-Sensors 20 weiterhin dadurch verbessert werden, dass die Dicke 11.3 der aus der erfindungsgemäßen Glaskeramik-Kochfläche 11 auf im gezeigten Ausführungsbeispiel 3,2 mm reduziert wird. Dies ist durch die fünfte Transmissionskurve 54.5 in Figur 2 gezeigt. Durch die erhöhte Festigkeit der erfindungsgemäßen Glaskeramik-Kochfläche 11 genügt diese auch bei einer Dicke 11.3 von 3,2 mm den Anforderungen bezüglich der zu erreichenden Stoßfestigkeit.

Die erfindungsgemäße Glaskeramik-Kochfläche 11 ermöglicht es, im Infrarotbereich zwischen ca. 3000nm und 4500nm eine berührungslose Temperaturmessung eines auf die Glaskeramik-Kochfläche 11 aufgestellten Kochgeschirrs 30 mit hoher Genauigkeit und Empfindlichkeit durchzuführen. Gleichzeitig bleibt der ästhetische Eindruck einer dunkel eingefärbten, nicht streuenden Glaskeramik-Kochfläche 11 halten. Dadurch können zum einen Anzeigen in bekannter Art und Weise unter der Glaskeramik-Kochfläche 11 angeordnet werden. Zum anderen wird ein automatisierter Kochbetrieb ermöglicht. Dieser wird auch für den besonders interessanten Temperaturbereich des Fortkochens ermöglicht. Beim Fortkochen wird das Kochgut 31 bei vergleichsweise niedrigen Temperaturen gegart. Die mit dem Infrarot-Sensor 20 zu erfassenden Temperaturen des Kochgeschirrs 30 liegen dabei in einem Bereich von 70°C bis 150°C. Wie durch die erste Leistungskurve 53.1 gezeigt, ist die Leistung der emittierten Wärmestrahlung 40 bei einer Gefäßtemperatur von 70 °C in dem Wellenlängenbereich, in dem der Infrarot-Sensor 20 seine maximale Empfindlichkeit aufweist, sehr gering. Bei Verwendung einer erfindungsgemäßen Glaskeramik-Kochfläche 11 mit einer auf 3,2 mm reduzierten Dicke 11.3 genügt die zum Infrarot-Sensor 20 abgestrahlte Wärmestrahlung 40 jedoch, um ein sicheres und reproduzierbares Meßsignal zu erhalten.

Fig. 4 zeigt die in Fig. 3 gezeigte Kochmulde 10 mit einer alternativen Anordnung des Infrarot-Sensors 20. Der Infrarot-Sensor 20 ist innerhalb der Kochmulde 10 seitlich des Heizkörpers 12 angeordnet. Ein Leiter 24 für elektromagnetische Strahlung ist von dem Infrarot-Sensor 20 zu der Unterseite 11.2 der Glaskeramik-Kochfläche 11 geführt. Auf der Seite der Glaskeramik-Kochfläche 11 ist der Leiter 24 derart ausgerichtet, dass eine Eintrittsfläche für die Wärmestrahlung 40 unmittelbar an oder gering beabstandet zu der Unterseite 11.2 der Glaskeramik-Kochfläche 11 angeordnet ist. Von dem Boden 30.1 des Kochgeschirrs 30 ausgehende Wärmestrahlung 40 gelangt so durch die Glaskeramik-Kochfläche 11 und die Eintrittsfläche in den Leiter 24. Der Leiter 24 ist derart ausgelegt, dass die Wärmestrahlung 40 in dem Leiter 24 durch Totalreflexion geführt wird. Dazu ist der Leiter 24 aus einem für Infrarotstrahlung hoch transparenten Material gefertigt. Der Leiter 24 kann, wie im gezeigten Ausführungsbeispiel, stabförmig oder in Form von optischen Fasern ausgeführt sein. Die Infrarot-Sensor 20 misst die ankommende Wärmestrahlung 40 und bildet daraus das Meßsignal, welches an die Elektronik weitergeleitet wird. Die Regelung des Kochvorgangs kann so wie zu Fig. 3 beschrieben erfolgen. Vorteilhaft bei der Anordnung ist, dass der Infrarot-Sensor 20 beabstandet zu dem Heizkörper 12 angeordnet werden kann. Dadurch kann eine Beschädigung des Infrarot-Sensors 20 durch zu hohe Temperaturen vermieden werden.

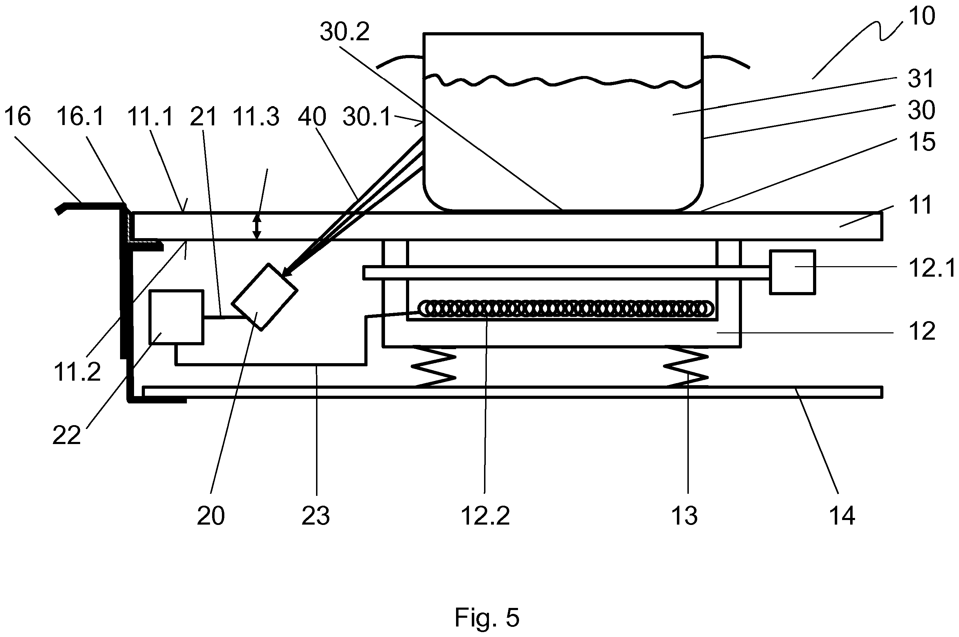

Fig. 5 zeigt die in den Fig. 3 und 4 gezeigte Kochmulde 10 mit einer weiteren Anordnung des Infrarot-Sensors 20. Auch hier ist der Infrarot-Sensor 20 seitlich des Heizkörpers 12 in der Kochmulde 10 angeordnet. Die Meßrichtung des Infrarot-Sensors 20 ist schräg durch die Glaskeramik-Kochfläche 11 führend in den Bereich der Kochzone 15 und damit auf die Seitenfläche 30.1 des aufgestellten Kochgeschirrs 30 ausgerichtet. Von der Seitenfläche 30.1 ausgehende Wärmestrahlung 40 kann so von dem Infrarot-Sensor 20 aufgefangen und für die Regelung der Temperatur des Kochgeschirrs 30 bzw. des Kochgutes 31 verwendet werden. Durch die schräge Ausrichtung des Infrarot-Sensors 20 ist die optische Weglänge der auszuwertenden Wärmestrahlung 40 innerhalb der Glaskeramik-Kochfläche 11 vergleichsweise lang. Aufgrund der hohen Transparenz der erfindungsgemäßen Glaskeramik sowie der reduzierten Dicke der Glaskeramik-Kochfläche 11 gelangt dennoch ein ausreichend großer Anteil der von der Seitenfläche 30.1 emittierten Wärmestrahlung 40 zu dem Infrarot-Sensor 20, um auch bei niedrigen Temperaturen des Kochgeschirrs 30 eine sichere Temperaturmessung zu ermöglichen. Vorteilhaft ist auch bei dieser Anordnung der Infrarot-Sensor 20 beabstandet zu dem Heizkörper 12 angeordnet, sodass eine Beschädigung des Infrarot-Sensors 20 durch eine zu große Wärmeeinwirkung vermieden werden kann. Ein weiterer Vorteil der Anordnung besteht darin, dass die Temperatur der Seitenfläche 30.1 bestimmt wird, welche in bestimmten Kochsituationen eine bessere Korrelation zu der Temperatur des Kochgutes 31 aufweist als die Temperatur des Bodens 30.2 des Kochgeschirrs 30. Ebenfalls vorteilhaft wirkt sich aus, dass die Messung durch einen vergleichsweise kalten Bereich der Glaskeramik-Kochfläche 11 hindurch durchgeführt wird. Störungen der Messung durch Fremdstrahlungen, beispielsweise ausgehend von dem Heizkörper 12 oder von der aufgeheizten Glaskeramik-Kochfläche 11, können so vermieden werden.

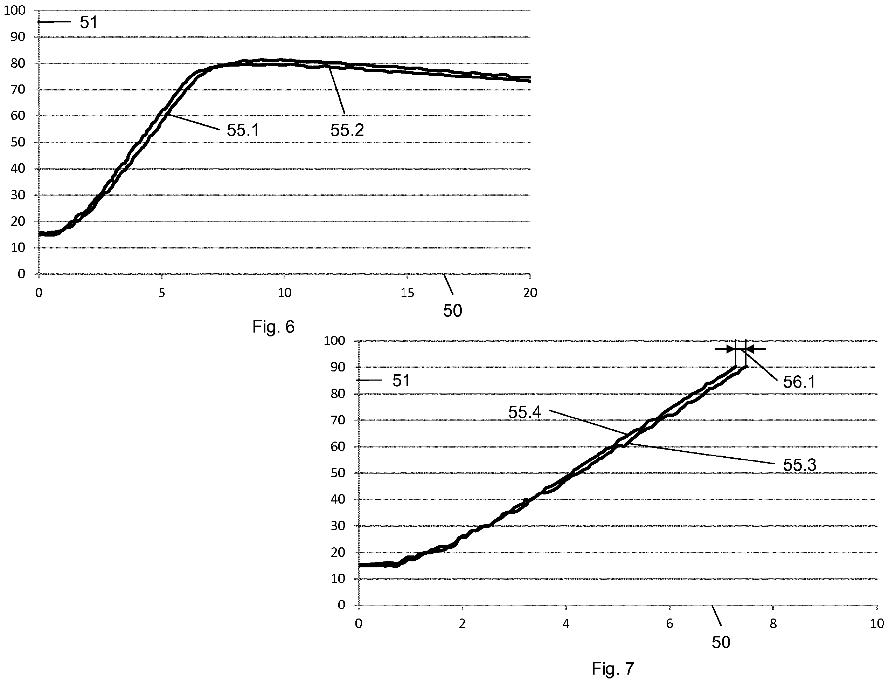

Fig. 6 zeigt ein drittes Diagramm zu einem Überschwingverhalten beim Ankochen von Wasser als Kochgut 31, wie es nach der Norm DIN EN 60350-2 bestimmt wird. Entlang der x-Achse 50 ist ein zeitlicher Verlauf, eingeteilt in Minuten, aufgetragen, während die y-Achse 51 eine Temperatur des Kochgutes 31 in Grad Celsius darstellt. Eine erste Temperaturkurve 55.1 wurde mit einer bekannten, 4mm dicken Glaskeramik-Kochfläche 11 gemessen, während eine zweite Temperaturkurve 55.2 mit einer erfindungsgemäßen Glaskeramik-Kochfläche 11 mit einer Dicke 11.3 von 3,2mm ermittelt wurde.

Bei dem Versuch werden 1,5kg Wasser, ausgehend von einer Temperatur von 15°C, aufgeheizt. Bei Erreichen einer Wassertemperatur von 70°C wird der Heizkörper 12 abgeschaltet. Ausgewertet wird die Überschwingtemperatur, also die Differenz zwischen der erreichten Maximaltemperatur und der Abschalttemperatur von 70°C. Wie der Vergleich der beiden Temperaturkurven 55.1, 55.2 zeigt, schwingt die Wassertemperatur bei Verwendung der dünneren, erfindungsgemäßen Glaskeramik-Kochfläche 11 um ca. 15% weniger über als bei Verwendung einer herkömmlichen 4mm dicken Glaskeramik-Kochfläche 11. Dies wirkt sich entsprechend positiv auf das Regelverhalten während eines regulären Kochbetriebs aus, da eine gewünschte Temperatur des Kochgutes schneller und genauer eingestellt werden kann.

Fig. 7 zeigt ein viertes Diagramm zur Ermittlung der Ankochdauer für Wasser als Kochgut 31. Auch hier erfolgt die Versuchsdurchführung nach DIN EN 60350-2. Danach werden 1,5 kg Wasser, ausgehend von 15 °C, aufgeheizt und die Zeitdauer bis zum Erreichen einer Wassertemperatur von 90 °C bestimmt.

Entlang der x-Achse 50 ist der zeitliche Verlauf in Minuten und entlang der y-Achse 51 die Temperatur des Wassers in Grad Celsius aufgetragen. Eine dritte Temperaturkurve 55.3 stellt den Temperaturverlauf bei Verwendung einer bekannten, 4mm dicken Glaskeramik-Kochfläche 11 dar. Eine vierte Temperaturkurve 55.4 ist entsprechend mit einer erfindungsgemäßen Glaskeramik-Kochfläche 11 mit einer Dicke 11.3 von 3,2mm aufgenommen. Wie durch die markierte erste Zeitersparnis 56.1 gezeigt, kann die Ankochzeit durch Verwendung der neuen Glaskeramik-Kochfläche 11 verbessert werden. Auch dies wirkt sich insbesondere bei gewünschten Temperaturänderung vorteilhaft auf das Regelverhalten der Kochmulde im Kochbetrieb aus. Bedingt durch die kürzeren Ankochzeiten reduziert sich auch der Ankoch-Energieverbrauch.

Fig. 8 zeigt ein fünftes Diagramm zum Abkühlverhalten von Glaskeramik-Kochflächen 11, ausgehend von einer Starttemperatur von 500 °C. Dabei sind eine fünfte Temperaturkurve 55.5 und eine sechste Temperaturkurve 55.6 gegenüber der in Grad Celsius eingeteilten y-Achse 51 und der in Minuten eingeteilten x-Achse 50 aufgetragen. Die fünfte Temperaturkurve 55.5 zeigt das Abkühlverhalten einer bekannten, 4 mm dicken Glaskeramik-Kochfläche 11, während die sechste Temperaturkurve 55.6 das Abkühlverhalten einer erfindungsgemäßen Glaskeramik-Kochfläche 11 mit einer Dicke 11.3 von 3,2mm darstellt. Eine zweite Zeitersparnis 56.2 markiert den Zeitunterschied im Abkühlverhalten der beiden Glaskeramik-Kochflächen 11 bis zum Erreichen einer Temperatur von 200 °C. Auch hier zeigt sich das deutlich schnellere Reaktionsvermögen der erfindungsgemäßen neuen Glaskeramik-Kochfläche mit 3,2 mm Materialstärke, wodurch eine weitere Verbesserung der Regelbarkeit der Temperatur eines Kochgutes 31 erreicht wird.

Zusammenfassend lässt sich sagen, dass die erfindungsgemäße Glaskeramik-Kochfläche 11 durch ihre verbesserten Transmissionseigenschaften im infraroten Bereich einen automatisierten Kochbetrieb mit Hilfe des Infrarot-Sensors 20 ermöglicht. Dabei können insbesondere bei Glaskeramik-Kochflächen 11 mit einer auf 3,2 mm reduzierten Dicke 11.3 auch niedrige Temperaturen eines Kochgeschirrs 30 erfasst werden. Dies ermöglicht einen geregelten Betrieb beispielsweise beim Fortkochen, bei dem die Temperaturen des Kochgeschirrs 30 im Bereich von 70-150 °C liegen. Gleichzeitig bleibt die Anmutung einer dunkel eingefärbten, transparenten Glaskeramik erhalten. Anzeigeelemente können weiterhin unter der Glaskeramik-Kochfläche 11 angeordnet werden. Die gültigen Vorgaben bezüglich der einzuhaltenden Stoßfestigkeit von Glaskeramik-Kochflächen 11 werden auch bei einer reduzierten Dicke 11.3 der Glaskeramik-Kochfläche 11 von 3,2 mm eingehalten

Fig. 9 zeigt einen Rand einer Glaskeramik-Kochfläche 11 mit einer angebrachten Facette 11.6 in einer Seitenansicht. Erfindungsgemäß weist die Glaskeramik-Kochfläche 11 einen Kern 11.5 mit einem erhöhten KMK-Phasenanteil und eine Gradientenschicht 11.4 mit einem erhöhten HQMK-Anteil auf. Zur einfachen Darstellung ist die in Wirklichkeit nur etwa 10μm dicke Gradientenschicht 11.4 gegenüber dem Kern 11.5 vergrößert dargestellt und eine darüber liegende amorphe Schicht ist nicht gezeigt. Vorteilhaft sind die Gradientenschicht 11.4 und der Kern 11.5 auch in dem in seiner Dicke 11.3 verminderten Bereich der Facette 11.6 der Glaskeramik-Kochfläche 11 geführt. Dadurch wirkt sich die erhöhte Festigkeit der erfindungsgemäßen Glaskeramik-Kochfläche 11 auch und insbesondere in dem aufgrund seiner Lage am äußeren Rand der Glaskeramik-Kochfläche 11 und seiner verringerten Dicke 11.3 besonders anfälligen Bereich der Facette 11.6 aus.

Fig. 10 zeigt eine gebogene Glaskeramik-Kochfläche 11 in einer Seitenansicht. Die Biegung 11.7 verläuft dabei senkrecht zur Zeichenebene. Wie die Darstellung zeigt, sind der Kern 11.5 und die Gradientenschicht 11.4 auch in den Bereich der Biegung 11.7 geführt und wirken dort festigkeitssteigernd.

Das Ankochverhalten bei Verwendung eines Strahlungsheizkörpers kann für die beschriebene Glaskeramik gemäß einer Ausführungsform der Erfindung im Vergleich zu einer herkömmlichen, 4 mm dicken Glaskeramik, ebenfalls charakterisiert werden durch die Bestimmung der Ankochzeit, also der Zeit, welche bis zur Erreichung der bestimmten Temperatur des Kochguts, der Regeltemperatur. ausgehend von einer Ausgangstemperatur, benötigt wird. Vorliegend liegt die Ausgangstemperatur des Kochguts bei 15°C, die Regeltemperatur bei 70°C. Mit der Glaskeramik gemäß einer Ausführungsform der Erfindung kann die Ankochzeit um bis zu 5% verringert werden.

Wird das Aufheizen von Wasser von 15°C auf 90°C unter Verwendung eines Strahlungsheizkörpers betrachtet, so ergeben sich hierbei ebenfalls Verbesserungen im Aufheizverhalten. Beispielsweise verringert sich die Ankochzeit für eine Kochmulde gemäß einer Ausführungsform der Erfindung um bis zu 4%. Der Energieverbrauch kann um bis zu 3,3% gegenüber eine Kochmulde, welche mit einer Glaskeramik von 4 mm Dicke ausgerüstet ist, gesenkt werden.

Weiterhin ist bei Verwendung einer 3 mm dicken Glaskeramikplatte gemäß einer Ausführungsform der Erfindung auch ein sogenanntes Fehlkochverhalten, also das Kochen mit einem leeren Topf, leichter zu entdecken. Da ein solches Fehlkochverhalten auch zur Überhitzung eines Kochfeldes führen kann, führt die bessere Erkennbarkeit dieses Fehlkochverhaltens bei Kochmulden gemäß Ausführungsformen der vorliegenden Erfindung somit zu einer verbesserten Sicherheit.

Um Fehlkochverhalten z.B leerkochender Topf im Labor abzuprüfen, werden Testreihen mit einem Induktionsgerät und speziellen Metallronden durchgeführt. Diese Testreihen zeigen, dass eine 25%ige Dickenreduktion eine um 10% schnelleres Abschalten der Kochzonenleistung zur Folge hat.

Sie sind somit insbesondere geeignet für sogenanntes "automatisches Kochen", welches beispielsweise sensorgesteuert aufläuft.

Weiterhin hat die Dicke der Glaskeramik, welche in einer Kochmulde verwendet wird, auch einen Einfluss auf den Energieverbrauch. Im Folgenden ist dies beispielhaft für eine Kochmulde aufgeführt, welche zum einen mit einer 4 mm dicken Glaskeramikplatte versehen ist, zum anderen eine Glaskeramikplatte von lediglich 3 mm nach einer Ausführungsform der Erfindung aufweist.

Die Berechnung wird im Folgenden durchgeführt für eine Kochzone mit einem Durchmesser von 32 cm. Beim Ankochen wird die Temperatur der Glaskeramik um 500°C erhöht, wie Messungen, bei denen die Temperatur der Glaskeramikoberseite bestimmt wurde, zeigen. Die für diese Temperaturerhöhung von 500°C bzw. 500 K ($\Delta T$ = 500 K) benötigte Energie E ergibt sich gemäß der folgenden Gleichung:

$$E = m \cdot c_p \cdot \Delta T \; ,$$

mit m gleich der Masse des aufgeheizten Bereichs und $c_p$ als der spezifischen Wärmekapazität der Glaskeramik. Die Masse m ergibt sich aus der Dichte $\rho$ der Glaskeramik von 2,6 g/cm$^3$ durch Multiplikation mit der Größe des aufgeheizten Volumens der Glaskeramik, wobei das aufgeheizte Volumen einem Zylinder mit einer Grundfläche $\pi \cdot r^2$ mit r = 16 cm sowie einer Dicke d von 0,4 cm bzw. 0,3 cm entspricht.

Danach berechnet sich für den Fall einer 4 mm dicken Glaskeramik die zum Ankochen benötigte Energie zu 334,567 kJ bzw. zu 92,94 Wh. Für den Fall einer Glaskeramik von 3 mm Dicke wird eine Energie von 250,925 kJ bzw. 69,7 Wh zum Ankochen benötigt. Damit verringert sich die zum Ankochen benötigte Energie um 25% bzw. im konkret betrachteten Fall um 23,24 Wh.

Wird anstelle des Aufheizens lediglich der Glaskeramik der gesamte Kochprozess betrachtet, also inklusive des Aufheizens des Kochgutes sowie dem Fortkochen, können die 23,24 Wh vom ermittelten Energieverbrauch für eine Kochmulde, welche mit einer Glaskeramikplatte von 4 mm Dicke ausgerüstet ist, abgezogen werden. Beispielhaft sind hierfür Werte für ein bestimmtes Heizelement in der folgenden Tabelle aufgeführt.

Tabelle 1

| Heizelement | Energieverbrauch [Wh] | Energieverbrauch [Wh/kg] |
|---|---|---|
| E.G.O. 320 mm / 4200 W 4 mm dicke Glaskeramik | 912,7 | 177,6 |
| E.G.O. 320 mm / 4200 W 3 mm dicke Glaskeramik | 889,5 | 173,0 |

Für das betrachtete Heizelement, hier einen Strahlungsheizkörper mit einer Leistung von 4200 W und einem Durchmesser von 320 mm, ergibt sich somit über den gesamten Kochprozess eine Verringerung des Energieverbrauchs von 2,5%.

Im Rahmen der vorliegenden Erfindung wird als "Energieverbrauch" die für einen Prozess notwendige Energie bezeichnet. In der oben stehenden Tabelle ist somit als "Energieverbrauch" einer Kochmulde mit einer Glaskeramikplatte von 4 mm Dicke die Energie zu verstehen, die für den hier betrachteten Kochprozess, also ein Ankochen sowie ein 20 minütiges Fortkochen, aufgewendet werden muss. Die Begriffe der Energie bzw. des Energieverbrauchs werden daher im Rahmen dieser Anmeldung weitgehend synonym verwendet.

Der durch die Verwendung einer dünneren Glaskeramikplatte verminderte Energieverbrauch ist insbesondere deswegen von Bedeutung, weil auf diese höchst einfache Weise der Kochprozess insgesamt effizienter gestaltet wird. Dies wiederum führt dazu, dass künftige Grenzwerte hinsichtlich der Energieeffizienz von beispielsweise Kochmulden, wie sie beispielsweise in der EU-Verordnung Nr. 66/2014 der Kommission vom 14. Januar 2014 genannt sind, auf höchst einfache Weise unterschritten bzw. eingehalten werden können, ohne dass dazu eine Anpassung der Beheizung notwendig wäre.

Weiterhin wird durch die Dickenreduktion auch eine Reduktion der Wärmequerleitung bewirkt. Die Wärmequerleitung bezieht sich auf die transportierte Wärmemenge Q, welche seitlich durch die nicht beheizten Bereiche der Glaskeramikplatte abfließt, und berechnet sich nach folgender Formel:

$$Q = (\lambda \cdot A \cdot t \cdot \Delta T) / l$$

L ist hierbei der Abstand zwischen der Kochzone und einer Ecke der Kochfläche und beträgt 0,025 m, $\Delta T$ ist die Temperaturdifferenz zwischen Heißbereich und dem Rand der Kochfläche und beträgt ungefähr 400K, t ist die Kochdauer und wird vorliegend mit 30 Minuten angenommen. $\Lambda$ beträgt 1,6 W/mK. A schließlich bezeichnet die Querschnittsfläche und berechnet sich für eine 4 mm dicke Glaskeramik zu $1,6*10^{-5}$ m$^2$ und für eine 3 mm dicke Glaskeramik zu $1,2*10^{-6}$ m$^2$.

Mit diesen Angaben berechnen sich die transportierten Wärmemengen zur 737,28 J im Falle einer 4 mm dicken Glaskeramik und 552,96 J in Falle der 3 mm dicken Glaskeramik. Hieraus ergibt sich für eine 25%ige Dickenänderung eine um 25% geringere transportierte Wärmemenge Q.

Aus dem vorstehend Genannten ergibt sich, dass Kochmulden gemäß Ausführungsformen der Erfindung also insgesamt eine verbesserte Regelbarkeit aufweisen. Unter Regelbarkeit im Sinne der vorliegenden Erfindung wird die Steuerung des Kochvorganges, insbesondere die Erzielung einer bestimmten Temperatur des Kochgutes, verstanden. Eine verbesserte Regelbarkeit liegt insbesondere dann vor, wenn eine kürzere Zeit zwischen der Vorgabe eines Soll-Wertes, beispielsweise einer Temperatur, und der Erzielung des Soll-Wertes erzielt wird. Darüber hinaus ist aber eine solche verbesserte Regelbarkeit auch dann gegeben, wenn bestimmte Sekundäreffekte verbessert sind. Insbesondere ist eine verbesserte Regelbarkeit daher auch gegeben, wenn insgesamt zur Erzielung eines bestimmten Effekts, beispielsweise zur Einstellung einer bestimmten Soll-Temperatur des Kochgutes, weniger Energie aufgebracht werden muss oder insgesamt Energieverluste minimiert werden.

Bezugszeichenliste

| | |
|---|---|
| 10 | Kochmulde |
| 11 | Glaskeramik-Kochfläche |
| 11.1 | Oberseite |
| 11.2 | Unterseite |
| 11.3 | Dicke |
| 11.4 | Gradientenschicht |
| 11.5 | Kern |
| 11.6 | Facette |
| 11.7 | Biegung |
| 12 | Heizkörper |
| 12.1 | Schutztemperaturbegrenzer |
| 12.2 | Heizwendel |
| 13 | Federelement |
| 14 | Kochmuldenboden |
| 15 | Kochzone |
| 16 | Rahmen |
| 16.1 | Klebstoff |
| 20 | Infrarot-Sensor |
| 21 | Signalleitung |
| 22 | Elektronik |
| 23 | Kabelverbindung |
| 24 | Leiter |
| 30 | Kochgeschirr |

| | |
|---|---|
| 30.1 | Seitenfläche |
| 30.2 | Boden |
| 31 | Kochgut |
| 40 | Wärmestrahlung |
| 41 | Energiefluss |
| 42 | Energieverlust |
| 50 | X-Achse |
| 51 | Y-Achse |
| 52 | zweite Y-Achse |
| 53 | Leistungskurven |
| 53.1 | erste Leistungskurve |
| 53.2 | zweite Leistungskurve |
| 53.3 | dritte Leistungskurve |
| 53.4 | vierte Leistungskurve |
| 53.5 | fünfte Leistungskurve |
| 53.6 | sechste Leistungskurve |
| 54 | Transmissionskurven |
| 54.1 | erste Transmissionskurve |
| 54.2 | zweite Transmissionskurve |
| 54.3 | dritte Transmissionskurve |
| 54.4 | vierte Transmissionskurve |
| 54.5 | fünfte Transmissionskurve |
| 55.1 | erste Temperaturkurve |
| 55.2 | zweite Temperaturkurve |
| 55.3 | dritte Temperaturkurve |
| 55.4 | vierte Temperaturkurve |
| 55.5 | fünfte Temperaturkurve |
| 55.6 | sechste Temperaturkurve |
| 56.1 | erste Zeitersparnis |
| 56.2 | zweite Zeitersparnis |

**Patentansprüche**

1. Kochmulde (10) mit einer Glaskeramik-Kochfläche (11) mit zumindest einer Kochzone (15) und zumindest einem unter der Glaskeramik-Kochfläche (11) im Bereich der Kochzone (15) angeordneten Heizkörper (12), **dadurch gekennzeichnet, dass** vorzugsweise in oder an der Kochmulde (10) zumindest ein Infrarot-Sensor (20) angeordnet ist, dass ein Messbereich des vorzugsweisen Infrarot-Sensors (20) durch die Glaskeramik-Kochfläche (11) hindurch zu der Kochzone (15) hin ausgerichtet ist, dass der vorzugsweise Infrarot-Sensor (20) vorzugsweise mit einer Elektronik (22) verbunden ist, dass die vorzugsweise Elektronik insbesondere dazu ausgelegt ist, die Leistung des zumindest einen Heizkörpers (12) in Abhängigkeit von einem Ausgangssignal des Infrarot-Sensors (20) zu regeln und dass die Glaskeramik-Kochfläche (11) als Lithium-Aluminosilikat-Glaskeramik (LAS-Glaskeramik) mit folgenden Bestandteilen in folgender Zusammensetzung (in Gewichtsprozent) gebildet ist:

| | |
|---|---|
| $Al_2O_3$ | 18 - 23 |
| $Li_2O$ | 2,5 - 4,2 |
| $SiO_2$ | 60 - 69 |
| $ZnO$ | 0-2 |
| $Na_2O + K_2O$ | 0,2 - 1,5 |
| $MgO$ | 0-1,5 |
| $CaO + SrO + BaO$ | 0 - 4 |
| $B_2O_3$ | 0 - 2 |
| $TiO_2$ | 2,3 - 4,5 |
| $ZrO_2$ | 0,5 - 2 |
| $P_2O_5$ | 0 - 3 |
| $SnO_2$ | 0 - <0,6 |

(fortgesetzt)

| | |
|---|---|
| $Sb_2O_3$ | 0 - 1,5 |
| $As_2O_3$ | 0 - 1,5 |
| $TiO_2 + ZrO_2 + SnO_2$ | 3,8 - 6 |
| vorzugsweise $V_2O_5$ | 0,01 - 0,08 |
| $Fe_2O_3$ | 0,008 - 0,3 |

und gegebenenfalls weitere Farboxide, in Summe bis maximal 1,0 Gewichtsprozent, wobei die Glaskeramik-Kochfläche (11) an ihrer Oberfläche oder zu ihrer Oberfläche hin gerichtet eine Gradientenschicht (11.4) und einen darunter liegenden Kern (11.5) aufweist, wobei die Glaskeramik-Kochfläche (11) im Kern (11.5) Keatitmischkristall (KMK) als vorherrschende Kristallphase und in der Gradientenschicht (11.4) Hochquarzmischkristall (HQMK) als vorherrschende Kristallphase aufweist und wobei der KMK-Kristallphasenanteil in einer Tiefe von $10\,\mu m$ oder mehr 50% der Summe der HQMK- und KMK-Kristallphasenanteile übersteigt.

2. Kochmulde (10) nach Anspruch 1, **dadurch gekennzeichnet, dass** die Glaskeramik-Kochfläche (11) eine Dicke (11.3) in einem Bereich zwischen 2,8mm und 4,2mm, bevorzugt zwischen 2,8mm und 3,5mm, besonders bevorzugt zwischen 2,8mm und 3,2mm aufweist.

3. Kochmulde (10) nach Anspruch 1 oder 2, **dadurch gekennzeichnet, dass** die Glaskeramik-Kochfläche (11), bezogen auf eine Dicke (11.3) von 4mm, bei einer Wellenlänge von 3000nm eine Transmission größer 5%, vorzugsweise größer 7%, aufweist und/oder dass sie bei einer Wellenlänge von 3200nm eine Transmission größer 18%, vorzugsweise größer 24%, aufweist und/oder dass sie bei einer Wellenlänge von 3400nm eine Transmission größer 37%, vorzugsweise größer 43%, aufweist und/oder dass sie bei einer Wellenlänge von 3600nm eine Transmission größer 51%, vorzugsweise größer 54%, aufweist.

4. Kochmulde (10) nach einem der Ansprüche 1 bis 3, **dadurch gekennzeichnet, dass** die Elektronik (22) dazu ausgelegt ist, einen Emissionskoeffizienten eines aufgestellten Kochgeschirrs (30) bei der Leistungsregelung des zumindest einen Heizkörpers (11) zu berücksichtigen.

5. Kochmulde (10) nach einem der Ansprüche 1 bis 4, **dadurch gekennzeichnet, dass** die Wärmestrahlung (40) eines aufgestellten Kochgeschirrs (30) zumindest entlang eines Abschnitts der Übertragungsstrecke von einem Leiter (24) für elektromagnetische Strahlung zu dem Infrarot-Sensor (20) geleitet ist.

6. Kochmulde (10) nach einem der Ansprüche 1 bis 5, **dadurch gekennzeichnet, dass** die Glaskeramik-Kochfläche (11) beidseitig mit einer glatten Oberfläche ausgeführt ist.

7. Kochmulde (10) nach einem der Ansprüche 1 bis 6, **dadurch gekennzeichnet, dass** an einer Unterseite (11.2) der Glaskeramik-Kochfläche (11) zumindest ein Strahlungsheizkörper und/oder ein Halogenheizkörper und/oder ein Induktionsheizkörper angeordnet ist oder dass der zumindest eine Heizkörper (12) durch eine elektrische Widerstandsbeheizung gebildet ist und dass Leiterbahnen der Widerstandsbeheizung mittelbar oder unmittelbar stoffschlüssig mit der Glaskeramik-Kochfläche (11) verbunden sind.

8. Kochmulde (10) nach einem der Ansprüche 1 bis 7, **dadurch gekennzeichnet, dass** der Infrarot-Sensor (20) und die Elektronik (22) für eine Regelung ab einer Temperatur eines aufgestellten Kochgeschirrs (30) von zumindest 90°C, vorzugsweise von zumindest 70°C, ausgelegt sind.

9. Kochmulde (10) nach einem der Ansprüche 1 bis 8, **dadurch gekennzeichnet, dass** die Dicke (11.3) der Glaskeramik-Kochfläche (11) bereichsweise verringert ist und dass die Gradientenschicht (11.4) innerhalb und/oder außerhalb der Bereiche mit der reduzierten Dicke (11.3) ausgebildet ist.

10. Kochmulde (10) nach einem der Ansprüche 1 bis 9, **dadurch gekennzeichnet, dass** die Glaskeramik-Kochfläche (11) gebogen und/oder dreidimensional verformt ist und dass die Gradientenschicht (11.4) innerhalb und/oder außerhalb der Biegung (11.7) und/oder der dreidimensionalen Verformung ausgebildet ist.

11. Kochmulde (10) nach einem der Ansprüche 1 bis 10, **dadurch gekennzeichnet, dass** die Glaskeramik-Kochfläche (11) zumindest einen Durchbruch, insbesondere eine Bohrung, aufweist und dass die Gradientenschicht (11.4) bis an den Rand des Durchbruchs ausgebildet ist und/oder dass die Gradientenschicht (11.4) an der Wandung des Durchbruchs ausgebildet ist.

12. Kochmulde (10 nach einem der Ansprüche 1 bis 11, **dadurch gekennzeichnet, dass** in oder an der Kochmulde (10) zumindest ein Infrarot-Sensor (20) angeordnet ist, dass ein Messbereich des Infrarot-Sensors (20) durch die Glaskeramik-Kochfläche (11) hindurch zu der Kochzone (15) hin ausgerichtet ist, dass der Infrarot-Sensor (20) mit einer Elektronik (22) verbunden ist, dass die Elektronik dazu ausgelegt ist, die Leistung des zumindest einen Heizkörpers (12) in Abhängigkeit von einem Ausgangssignal des Infrarot-Sensors (20) zu regeln und dass die Glaskeramik-Kochfläche (11) als Lithium-Aluminosilikat-Glaskeramik (LAS-Glaskeramik) mit folgenden Bestandteilen in folgender Zusammensetzung (in Gewichtsprozent) gebildet ist:

| | |
|---|---|
| $Al_2O_3$ | 18 - 23 |
| $Li_2O$ | 2,5 - 4,2 |
| $SiO_2$ | 60 - 69 |
| $ZnO$ | 0-2 |
| $Na_2O + K_2O$ | 0,2 - 1,5 |
| $MgO$ | 0 - 1,5 |
| $CaO + SrO + BaO$ | 0 - 4 |
| $B_2O_3$ | 0 - 2 |
| $TiO_2$ | 2,3 - 4,5 |
| $ZrO_2$ | 0,5 - 2 |
| $P_2O_5$ | 0 - 3 |
| $SnO_2$ | 0 - <0,6 |
| $Sb_2O_3$ | 0 - 1,5 |
| $As_2O_3$ | 0 - 1,5 |
| $TiO_2 + ZrO_2 + SnO_2$ | 3,8 - 6 |
| vorzugsweise $V_2O_5$ | 0,01 - 0,08 |
| $Fe_2O_3$ | 0,008 - 0,3 |

und gegebenenfalls weitere Farboxide, in Summe bis maximal 1,0 Gewichtsprozent, wobei

die Glaskeramik-Kochfläche (11)
einen Kern aufweist und
an ihrer Oberfläche oder zu ihrer Oberfläche hin gerichtet eine Gradientenschicht (11.4) aufweist und der Kern (11.5) unter der Gradientenschicht (11.4) angeordnet ist,
wobei die Glaskeramik-Kochfläche (11) im Kern (11.5) Keatitmischkristall (KMK) als vorherrschende Kristallphase und
die Gradientenschicht (11.4) Hochquarzmischkristall (HQMK) als vorherrschende Kristallphase aufweist und wobei der KMK-Kristallphasenanteil in einer Tiefe von $10\mu m$ oder mehr 50% der Summe der HQMK- und KMK-Kristallphasenanteile übersteigt
wobei jeweils normiert auf eine 4mm dicke Glaskeramik-Kochfläche (11), der maximale Streulichtanteil ("Haze") bei einer Wellenlänge von 470nm höchstens 15%, vorzugsweise höchstens 12%, beträgt und/oder dass der maximale Streuanteil in einem Wellenlängenbereich von 400nm bis 500nm höchstens 20%, vorzugsweise höchstens 17%, beträgt.

13. Kochmulde (10) nach einem der Ansprüche 1 bis 12, **dadurch gekennzeichnet, dass**, jeweils normiert auf eine 4mm dicke Glaskeramik-Kochfläche (11), der maximale Haze bei einer Wellenlänge von 630nm höchstens 6%, vorzugsweise höchstens 5%, besonders bevorzugt höchstens 4% beträgt.

14. Kochmulde (10) nach einem der Ansprüche 1 bis 13, **dadurch gekennzeichnet, dass** jeweils normiert auf eine 4mm dicke Glaskeramik-Kochfläche (11), der maximale Streulichtanteil ("Haze") bei einer Wellenlänge von 470nm höchstens 15%, vorzugsweise höchstens 12%, beträgt und/oder dass der maximale Streuanteil in einem Wellenlängenbereich von 400nm bis 500nm höchstens 20%, vorzugsweise höchstens 17%, beträgt.

15. Kochmulde (10) nach einem der Ansprüche 1 bis 14,

**dadurch gekennzeichnet, dass**, jeweils normiert auf eine 4mm dicke Glaskeramik-Kochfläche (11), der Lichttransmissionsgrad im Wellenlängenbereich von 380nm bis 780nm kleiner oder gleich 5% ist, wobei vorzugsweise der spektrale Transmissionsgrad bei einer Wellenlänge von 420nm größer als 0,2% ist.

**Claims**

1. Cooktop (10) having a glass-ceramic cooking surface (11) having at least one cooking zone (15) and at least one heating element (12) arranged under the glass-ceramic cooking surface (11) in the region of the cooking zone (15), **characterized in that** at least one infrared sensor (20) is preferably arranged in or on the cooktop (10), **in that** a measurement range of the preferably infrared sensor (20) is oriented through the glass-ceramic cooking surface (11) to the cooking zone (15), **in that** the preferably infrared sensor (20) is preferably connected to an electronic system (22), **in that** the preferably electronic system is configured for, in particular, regulating the power of the at least one heating element (12) as a function of an output signal of the infrared sensor (20) and **in that** the glass-ceramic cooking surface (11) is configured as lithium aluminosilicate glass-ceramic (LAS glass-ceramic) comprising the following constituents in the following composition (in percent by weight) :

| | |
|---|---|
| $Al_2O_3$ | 18-23 |
| $Li_2O$ | 2.5-4.2 |
| $SiO_2$ | 60-69 |
| $ZnO$ | 0-2 |
| $Na_2O + K_2O$ | 0.2-1.5 |
| $MgO$ | 0-1 . 5 |
| $CaO + SrO + BaO$ | 0-4 |
| $B_2O_3$ | 0 - 2 |
| $TiO_2$ | 2.3-4.5 |
| $ZrO_2$ | 0.5-2 |
| $P_2O_5$ | 0-3 |
| $SnO_2$ | 0-<0.6 |
| $Sb_2O_3$ | 0-1.5 |
| $As_2O_3$ | 0-1.5 |
| $TiO_2 + ZrO_2 + SnO_2$ | 3.8-6 |
| preferably $V_2O_5$ | 0.01-0.08 |
| $Fe_2O_3$ | 0.008-0.3 |

and optionally further colour oxides, up to a maximum of 1.0 percent by weight in total, where the glass-ceramic cooking surface (11) has a gradient layer (11.4) at its surface or facing its surface and a core (11.5) located underneath, where the glass-ceramic cooking surface (11) comprises keatite mixed crystal (KMC) as predominant crystal phase in the core (11.5) and high-quartz mixed crystal (HQMC) as predominant crystal phase in the gradient layer (11.4) and where the KMC crystal phase proportion at a depth of 10 $\mu$m or more exceeds 50% of the sum of the HQMC and KMC crystal phase proportions.

2. Cooktop (10) according to Claim 1, **characterized in that** the glass-ceramic cooking surface (11) has a thickness (11.3) in a range from 2.8 mm to 4.2 mm, preferably from 2.8 mm to 3.5 mm, particularly preferably from 2.8 mm to 3.2 mm.

3. Cooktop (10) according to Claim 1 or 2, **characterized in that** the glass-ceramic cooking surface (11) has, based on a thickness (11.3) of 4 mm, a transmission at a wavelength of 3000 nm of greater than 5%, preferably greater than 7%, and/or **in that** it has a transmission at a wavelength of 3200 nm of greater than 18%, preferably greater than 24%, and/or **in that** it has a transmission at a wavelength of 3400 nm of greater than 37%, preferably greater than 43%, and/or **in that** it has a transmission at a wavelength of 3600 nm of greater than 51%, preferably greater than 54%.

4. Cooktop (10) according to any of Claims 1 to 3, **characterized in that** the electronic system (22) is configured for taking into account an emission coefficient of an item of cookware (30) placed on top in the regulation of the power of the at least one heating element (11).

5. Cooktop (10) according to any of Claims 1 to 4, **characterized in that** the heat radiation (40) of an item of cookware (30) placed on top is conducted at least along a section of the transmission distance by a conductor (24) for electromagnetic radiation to the infrared sensor (20).

6. Cooktop (10) according to any of Claims 1 to 5, **characterized in that** the glass-ceramic cooking surface (11) is provided with a smooth surface on both sides.

7. Cooktop (10) according to any of Claims 1 to 6, **characterized in that** at least one radiative heating element and/or a halogen heating element and/or an induction heating element is arranged on an underside (11.2) of the glass-ceramic cooking surface (11) or **in that** the at least one heating element (12) is formed by an electric resistance heating element and **in that** conductor tracks of the resistance heating element are joined directly or indirectly by substance-to-substance bonding to the glass-ceramic cooking surface (11).

8. Cooktop (10) according to any of Claims 1 to 7, **characterized in that** the infrared sensor (20) and the electronic system (22) are configured for regulation at or above a temperature of an item of cookware (30) placed on top of at least 90°C, preferably at least 70 °C.

9. Cooktop (10) according to any of Claims 1 to 8, **characterized in that** the thickness (11.3) of the glass-ceramic cooking surface (11) is decreased in regions and **in that** the gradient layer (11.4) has a reduced thickness (11.3) within and/or outside the regions.

10. Cooktop (10) according to any of Claims 1 to 9, **characterized in that** the glass-ceramic cooking surface (11) is curved and/or three-dimensionally deformed and **in that** the gradient layer (11.4) is present within and/or outside the curved region (11.7) and/or the three-dimensional deformation.

11. Cooktop (10) according to any of Claims 1 to 10, **characterized in that** the glass-ceramic cooking surface (11) has at least one opening, in particular a drilled hole, and **in that** the gradient layer (11.4) is present up to the edge of the opening and/or **in that** the gradient layer (11.4) is formed on the wall of the opening.

12. Cooktop (10) according to any of Claims 1 to 11, **characterized in that** at least one infrared sensor (20) is arranged in or on the cooktop (10), **in that** a measurement region of the infrared sensor (20) is oriented through the glass-ceramic cooking surface (11) to the cooking zone (15), **in that** the infrared sensor (20) is connected to an electronic system (22), **in that** the electronic system is configured for regulating the power of the at least one heating element (12) as a function of an output signal of the infrared sensor (20) and **in that** the glass-ceramic cooking surface (11) is configured as lithium aluminosilicate glass-ceramic (LAS glass-ceramic) comprising the following constituents in the following composition (in percent by weight):

| | |
|---|---|
| $Al_2O_3$ | 18-23 |
| $Li_2O$ | 2.5-4.2 |
| $SiO_2$ | 60-69 |
| $ZnO$ | 0-2 |
| $Na_2O + K_2O$ | 0.2-1.5 |
| $MgO$ | 0-1.5 |
| $CaO + SrO + BaO$ | 0-4 |
| $B_2O_3$ | 0-2 |
| $TiO_2$ | 2.3-4.5 |
| $ZrO_2$ | 0.5-2 |
| $P_2O_5$ | 0 - 3 |
| $SnO_2$ | 0-<0.6 |
| $Sb_2O_3$ | 0-1.5 |
| $As_2O_3$ | 0-1.5 |
| $TiO_2 + ZrO_2 + SnO_2$ | 3.8-6 |
| preferably $V_2O_5$ | 0.01-0.08 |
| $Fe_2O_3$ | 0.008-0.3 |

and optionally further colour oxides up to a maximum of 1.0 percent by weight in total, where the glass-ceramic cooking surface (11) has a core and has a gradient layer (11.4) at its surface or facing its surface and the core (11.5) is arranged under the gradient layer (11.4), where the glass-ceramic cooking surface (11) comprises keatite mixed crystal. (KMC) as predominant crystal phase in the core (11.5) and the gradient layer (11.4) comprises high-quartz mixed crystal (HQMC) as predominant crystal phase and where the KMC crystal phase proportion at a depth of 10 μm or more exceeds 50% of the sum of the HQMC and KMC crystal phase proportions, where, in each case normalized to a 4 mm, thick glass-ceramic cooking surface (11), the maximum proportion of scattered light ("haze") at a wavelength of 470 nm is not more than 15%, preferably not more than 12%, and/or **in that** the maximum haze in a wavelength range from 400 nm to 500 nm is not more than 20%, preferably not more than 17%.

13. Cooktop (10) according to any of Claims 1 to 12, **characterized in that**, in each case normalized to a 4 mm thick glass-ceramic cooking surface (11), the maximum haze at a wavelength of 630 nm is not more than 6%, preferably not more than 5%, particularly preferably not more than 4%.

14. Cooktop (10) according to any of Claims 1 to 13, **characterized in that**, in each case normalized to a 4 mm thick glass-ceramic cooking surface (11), the maximum proportion of scattered light ("haze") at a wavelength of 470 nm is not more than 15%, preferably not more than 12%, and/or **in that** the maximum haze in a wavelength range from 400 nm to 500 nm is not more than 20%, preferably not more than 17%.

15. Cooktop (10) according to any of Claims 1 to 14, **characterized in that**, in each case normalized to a 4 mm thick glass-ceramic cooking surface (11), the light transmissivity in the wavelength range from 380 nm to 780 nm is less than or equal to 5%, with the spectral transmissivity at a wavelength of 420 nm preferably being greater than 0.2%.

**Revendications**

1. Plaque de cuisson (10) comprenant une surface de cuisson en vitrocéramique (11) dotée d'au moins une zone de cuisson (15) et d'au moins un élément chauffant (12) disposé sous la surface de cuisson en vitrocéramique (11), dans la région de la zone de cuisson (15), **caractérisée en ce qu'**au moins un capteur infrarouge (20) est disposé de préférence dans ou sur la plaque de cuisson (10), **en ce qu'**une zone de mesure du capteur infrarouge (20) préféré est orientée à travers la surface de cuisson en vitrocéramique (11), en direction de la zone de cuisson (15), **en ce que** le capteur infrarouge (20) préféré est de préférence relié à une électronique (22), **en ce que** l'électronique préférée est notamment conçue pour régler la puissance de l'élément chauffant (12), au nombre d'au moins un, en fonction d'un signal de sortie du capteur infrarouge (20), et **en ce que** la surface de cuisson en vitrocéramique (11) est réalisée sous forme de vitrocéramique en aluminosilicate de lithium (vitrocéramique LAS) avec les constituants suivants, dans la composition suivante (en pour cent en poids) :

| | |
|---|---|
| $Al_2O_3$ | 18 à 23 |
| $Li_2O$ | 2,5 à 4,2 |
| $SiO_2$ | 60 à 69 |
| $ZnO$ | 0 à 2 |
| $Na_2O+K_2O$ | 0,2 à 1,5 |
| $MgO$ | 0 à 1,5 |
| $CaO+SrO+BaO$ | 0 à 4 |
| $B_2O_3$ | 0 à 2 |
| $TiO_2$ | 2,3 à 4,5 |
| $ZrO_2$ | 0,5 à 2 |
| $P_2O_5$ | 0 à 3 |
| $SnO_2$ | 0 à < 0,6 |
| $Sb_2O_3$ | 0 à 1,5 |
| $As_2O_3$ | 0 à 1,5 |
| $TiO_2+ZrO_2+SnO_2$ | 3,8 à 6 |
| de préférence $V_2O_5$ | 0,01 à 0,08 |
| $Fe_2O_3$ | 0,008 à 0,3 |

et, le cas échéant, d'autres oxydes de production de couleur, au total jusqu'à 1,0 pour cent en poids au maximum, la surface de cuisson en vitrocéramique (11) présentant sur sa surface ou en direction de sa surface, une couche à gradient (11.4) et un noyau (11.5) situé en dessous, la surface de cuisson en vitrocéramique (11) présentant dans le noyau (11.5) du cristal mixte de kéatite (KMK) en tant que phase cristalline prédominante et présentant dans la couche à gradient (11.4), du cristal mixte de quartz β (HQMK) en tant que phase cristalline prédominante, et la part de phase cristalline KMK dépassant 50 % du total des parts de phases cristallines HQMK et KMK, à une profondeur de 10 μm ou plus.

**2.** Plaque de cuisson (10) selon la revendication 1, **caractérisée en ce que** la surface de cuisson en vitrocéramique (11) présente une épaisseur (11.3) située dans une plage comprise entre 2,8 mm et 4,2 mm, de préférence entre 2,8 mm et 3,5 mm, et de manière particulièrement avantageuse entre 2,8 mm et 3,2 mm.

**3.** Plaque de cuisson (10) selon la revendication 1 ou 2, **caractérisée en ce que** la surface de cuisson en vitrocéramique (11), rapporté à une épaisseur (11.3) de 4 mm, pour une longueur d'onde de 3 000 nm, présente une transmission supérieure à 5 %, de préférence supérieure à 7 %, et/ou **en ce que**, pour une longueur d'onde de 3 200 mm, elle présente une transmission supérieure à 18 %, de préférence supérieure à 24%, et/ou **en ce que**, pour une longueur d'onde de 3 400 nm, elle présente une transmission supérieure à 37 %, de préférence supérieure à 43 %, et/ou **en ce que**, pour une longueur d'onde de 3 600 nm, elle présente une transmission supérieure à 51 %, de préférence supérieure à 54 %.

**4.** Plaque de cuisson (10) selon l'une des revendications 1 à 3, **caractérisée en ce que** l'électronique (22) est conçue pour prendre en compte un coefficient d'émission d'un ustensile de cuisson (30) posé, afin de régler la puissance de l'élément chauffant (11), au nombre d'au moins un.

**5.** Plaque de cuisson (10) selon l'une des revendications 1 à 4, **caractérisée en ce que** le rayonnement thermique (40) d'un ustensile de cuisson (30) posé est guidé au moins le long d'une portion du trajet de transmission depuis un conducteur (24) de rayonnement électromagnétique jusqu'au capteur infrarouge (20).

**6.** Plaque de cuisson (10) selon l'une des revendications 1 à 5, **caractérisée en ce que** la surface de cuisson en vitrocéramique (11) est réalisée avec une surface lisse sur les deux faces.

**7.** Plaque de cuisson (10) selon l'une des revendications 1 à 6, **caractérisée en ce que**, sur une face inférieure (11.2) de la surface de cuisson en vitrocéramique (11), il est prévu au moins un élément chauffant radiant et/ou un élément chauffant à halogène et/ou un élément chauffant à induction, ou **en ce que** l'élément chauffant (12), au nombre d'au moins un, est constitué d'un chauffage par résistance électrique, et **en ce que** des pistes conductrices du chauffage par résistance sont reliées de manière indirecte ou directe, par matière, à la surface de cuisson en vitrocéramique (11).

**8.** Plaque de cuisson (10) selon l'une des revendications 1 à 7, **caractérisée en ce que** le capteur infrarouge (20) et l'électronique sont conçus pour une régulation à partir d'une température d'au moins 90 °C, de préférence d'au moins 70 °C, d'un ustensile de cuisson (30) posé.

**9.** Plaque de cuisson (10) selon l'une des revendications 1 à 8, **caractérisée en ce que** l'épaisseur (11.3) de la surface de cuisson en vitrocéramique (11) est réduite dans certaines zones, et **en ce que** la couche de gradient (11,4) est réalisée à l'intérieur et/ou à l'extérieur des zones d'épaisseur réduite (11.3).

**10.** Plaque de cuisson (10) selon l'une des revendications 1 à 9, **caractérisée en ce que** la surface de cuisson en vitrocéramique (11) est incurvée et/ou déformée en trois dimensions, et **en ce que** la couche à gradient (11.4) est réalisée à l'intérieur et/ou à l'extérieur de la courbure (11.7) et/ou de la déformation en trois dimensions.

**11.** Plaque de cuisson (10) selon l'une des revendications 1 à 10, **caractérisée en ce que** la surface de cuisson en vitrocéramique (11) présente au moins un passage, de préférence un trou, et **en ce que** la couche à gradient (11.4) est formée jusqu'au bord du passage, et/ou **en ce que** la couche à gradient (11.4) est réalisée sur la paroi du passage.

**12.** Plaque de cuisson (10) selon l'une des revendications 1 à 11, **caractérisée en ce qu'**au moins un capteur infrarouge (20) est disposé dans ou sur la plaque de cuisson (10), **en ce qu'**une zone de mesure du capteur infrarouge (20) est orientée à travers la surface de cuisson en vitrocéramique (11), en direction de la zone de cuisson (15), **en ce que** le capteur infrarouge (20) est relié à une électronique (22), **en ce que** l'électronique est conçue pour régler la puissance de l'élément chauffant (12), au nombre d'au moins un, en fonction d'un signal de sortie du capteur infrarouge (20), et **en ce que** la surface de cuisson en vitrocéramique (11) est réalisée sous forme de vitrocéramique en aluminosilicate de lithium (vitrocéramique LAS) avec les constituants suivants, dans la composition suivante (en pour cent en poids) :

| | |
|---|---|
| $Al_2O_3$ | 18 à 23 |
| $Li_2O$ | 2,5 à 4,2 |
| $SiO_2$ | 60 à 69 |
| $ZnO$ | 0 à 2 |
| $Na_2O+K_2O$ | 0,2 à 1,5 |
| $MgO$ | 0 à 1,5 |
| $CaO+SrO+BaO$ | 0 à 4 |
| $B_2O_3$ | 0 à 2 |
| $TiO_2$ | 2,3 à 4,5 |
| $ZrO_2$ | 0,5 à 2 |
| $P_2O_5$ | 0 à 3 |
| $SnO_2$ | 0 à < 0,6 |
| $Sb_2O_3$ | 0 à 1,5 |
| $AS_2O_3$ | 0 à 1,5 |
| $TiO_2+ZrO_2+,SnO_2$ | 3,8 à 6 |
| de préférence $V_2O_5$ | 0,01 à 0,08 |
| $Fe_2O_3$ | 0,008 à 0,3 |

et, le cas échéant, d'autres oxydes de production de couleur, au total jusqu'à 1,0 pour cent en poids au maximum, la surface de cuisson en vitrocéramique (11) présentant un noyau et, sur sa surface ou en direction de sa surface, une couche à gradient (11.4), et le noyau (11.5) étant disposé sous la couche à gradient (11.4), la surface de cuisson en vitrocéramique (11) présentant dans le noyau (11.5) du cristal mixte de kéatite (KMK) en tant que phase cristalline prédominante, et la couche à gradient (11.4) présentant du cristal mixte de quartz β (HQMK) en tant que phase cristalline prépondérante, et la part de phase cristalline KMK dépassant 50 % du total des parts de phases cristallines HQMK et KMK, à une profondeur de 10 μm ou plus, sachant qu'avec une standardisation respective pour une surface de cuisson en vitrocéramique (11) d'une épaisseur de 4 mm, la part maximale de lumière diffuse (« Haze »), pour une longueur d'onde de 470 nm, est au maximum de 15 %, de préférence au maximum de 12 %, et/ou **en ce que** la part diffuse maximale, dans une gamme de longueurs d'onde allant de 400 nm à 500 nm, est au maximum de 20 %, de préférence au maximum de 17 %,

13. Plaque de cuisson (10) selon l'une des revendications 1 à 12, **caractérisée en ce qu'**avec une standardisation respective pour une surface de cuisson en vitrocéramique (11) d'une épaisseur de 4 mm, le Haze maximal, pour une longueur d'onde de 630 nm, est au maximum de 6 %, de préférence au maximum de 5 %, et de manière particulièrement avantageuse au maximum de 4 %.

14. Plaque de cuisson (10) selon l'une des revendications 1 à 13, **caractérisée en ce qu'**avec une standardisation respective pour une surface de cuisson en vitrocéramique (11) d'une épaisseur de 4 mm, la part maximale de lumière diffusée (« Haze »), pour une longueur d'onde de 470 nm, est au maximum de 15 %, de préférence au maximum de 12 %, et/ou **en ce que** la part diffuse maximale, dans une gamme de longueurs d'onde allant de 400 nm à 500 nm, est au maximum de 20 %, de préférence au maximum de 17 %.

15. Plaque de cuisson (10) selon l'une des revendications 1 à 14, **caractérisée en ce qu'**avec une standardisation respective pour une surface de cuisson en vitrocéramique (11) d'une épaisseur de 4 mm, le degré de transmission de la lumière, dans la gamme de longueurs d'onde allant de 380 nm à 780 nm, est inférieur ou égal à 5 %, le degré de transmission spectrale étant de préférence supérieur à 0,2 %, pour une longueur d'onde de 420 nm.

Fig. 1

Fig. 2

Fig. 3

Fig. 4

Fig. 5

EP 3 196 175 B1

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2072334 A
- DE 19856140 A1
- DE 29522310 U1
- WO 2015068393 A1
- DE 19654773 C1
- WO 2008148529 A1
- DE 102009013127 A1
- US 2010304948 A1

**In der Beschreibung aufgeführte Nicht-Patentliteratur**

- Low Thermal Expansion Glass Ceramics